# NEUE EUROPÄISCHE PATENTSCHRIFT

(11) **EP 1 838 977 B2**
(45) Veröffentlichungstag und Bekanntmachung des Hinweises auf die Entscheidung über den Einspruch: **17.12.2014**
(45) Hinweis auf die Patenterteilung: 10.11.2010
(21) Anmeldenummer: 05754705.1
(22) Anmeldetag: 29.06.2005
(51) Int. Cl.: F16H 3/66

(54) **MEHRSTUFENGETRIEBE**
MULTISPEED TRANSMISSION
TRANSMISSION POLYETAGEE

(30) Priorität: 17.01.2005 DE 102005002337
(43) Veröffentlichungstag der Anmeldung: 03.10.2007
(73) Patentinhaber: ZF FRIEDRICHSHAFEN Aktiengesellschaft, 88038 Friedrichshafen (DE)
(72) Erfinder: DIOSI, Gabor, 88045 Friedrichshafen (DE); HAUPT, Josef, 88069 Tettnang (DE); GUMPOLTSBERGER, Gerhard, 88045 Friedrichshafen (DE); ZIEMER, Peter, 88069 Tettnang (DE); KAMM, Michael, 88285 Bodnegg (DE); BREHMER, Martin, 78467 Konstanz (DE)
(86) Internationale Anmeldenummer: PCT/EP2005/006989
(87) Internationale Veröffentlichungsnummer: WO 2006/074707

(56) Entgegenhaltungen:
- DE-A1- 10 315 709
- DE-A1- 19 949 507
- US-A- 6 039 670
- US-A1- 2002 119 859

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Ein derartiges Mehrgang-Automatgetriebe geht beispielsweise aus der DE 102 13 820 A1 hervor. Es umfasst im Wesentlichen eine Antriebswelle und eine Abtriebswelle, die koaxial zueinander angeordnet sind, insgesamt drei Planetenradsätze und sechs Reibschaltelemente. Zur Übertragung der Drehzahl der Antriebswelle auf die Abtriebswelle weist das Getriebe zwei Leistungspfade auf. Zwei der Planetenradsätze bilden einen schaltbaren Hauptradsatz des Getriebes in Form eines Zweisteg-Vierwellen-Planetengetriebes, konstruktiv ausgeführt beispielsweise als ein so genannter Ravigneaux-Planetenradsatz oder als ein so genannter Simpson-Planetenradsatz. Das Ausgangselement des Hauptradsatzes ist mit der Abtriebswelle des Getriebes verbunden ist. Der verbleibende der drei Planetenradsätze ist als einfacher Planetenradsatz ausgeführt und bildet einen nicht schaltbaren Vorschaltradsatz, der mit der Antriebswelle fest verbunden ist und ausgangsseitig eine Drehzahl erzeugt, die neben der Drehzahl der Antriebswelle auf verschiedene Eingangselemente des Hauptradsatzes übertragbar ist. Durch selektives Sperren von jeweils zwei der sechs als Kupplungen und Bremsen ausgeführten Reibschaltelemente sind insgesamt acht Vorwärtsgänge gruppenschaltungsfrei schaltbar, also derart schaltbar, dass bei einem Wechsel von einem Gang in den nachfolgend höheren oder niedrigeren Gang jeweils nur eines der zuvor geschlossenen Schaltelemente geöffnet und ein zuvor offenes Schaltelement geschlossen wird.

Des weiteren ist aus der DE 199 49 507 A1 der Anmelderin ein Mehrstufengetriebe bekannt, bei dem an der Antriebswelle zwei nicht schaltbare Vorschaltplanetenradsätze vorgesehen sind, die ausgangsseitig zwei Drehzahlen erzeugen, die neben der Drehzahl der Antriebswelle wahlweise auf zwei verschiedene Eingangselemente eines auf die Abtriebswelle wirkenden, schaltbaren, mehrgliedrigen Hauptradsatzes durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss. Der Hauptradsatz ist wiederum als Zweisteg-Vierwellen-Planetenradsatz ausgebildet, dessen beide Planetenradsätze über zwei Elemente fest miteinander gekoppelt sind. Unter Verwendung von fünf Schaltelementen sind dabei sieben Vorwärtsgänge gruppenschaltungsfrei schaltbar, unter Verwendung von sechs Schaltelementen sogar neun oder zehn Vorwärtsgänge.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens acht Vorwärtsgänge ohne Gruppenschaltung schaltbar sind. Der Vorschaltsatz wird aus einem schaltbaren oder nicht schaltbaren Planetenradsatz oder aus maximal zwei nicht schaltbaren, miteinander gekoppelten Planetenradsätzen gebildet. Der Nachschaltsatz ist als Zweisteg-Vierwellen-Getriebe mit zwei schaltbaren Nachschalt-Planetenradsätzen ausgebildet und weist vier freie Wellen auf. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement und die erste freie Welle zusätzlich mit einem siebten Schaltelement zu verbinden.

Mehrere andere Mehrstufengetriebe sind beispielsweise auch aus der DE 101 15 995 A1 der Anmelderin bekannt, bei denen vier schaltbare, miteinander gekoppelte Planetenradsätze und sechs oder sieben reibschlüssige Schaltelemente vorgesehen sind, durch deren selektives Schließen eine Drehzahl einer Antriebswelle des Getriebes derart auf eine Abtriebswelle des Getriebes übertragbar ist, dass neun oder elf Vorwärtsgänge und zumindest ein Rückwärtsgang schaltbar sind. Je nach Getriebeschema sind in jedem Gang zwei oder drei Schaltelemente geschlossen, wobei bei einem Wechsel von einem Gang in den jeweils nächstfolgend höheren oder nächstfolgend niedrigeren Gang zur Vermeidung von Gruppenschaltungen jeweils nur ein geschlossenes Schaltelement geöffnet und ein zuvor nicht geschlossenes Schaltelement zugeschaltet wird.

Ein 8-Gang-Mehrstufengetriebe ist ferner aus der DE 29 36 969 A1 bekannt, umfassend vier koaxiale Einfach-Planetenradsätze und acht Reibschaltelemente.

Ein Mehrstufen-Automatgetriebe ist ferner aus der US 4,683,776 bekannt, umfassend vier Einfach-Planetenradsätze und sechs Reibschaltelemente. Alle vier Planetenradsätze sind als so genannte Minus-Planetenradsätze in Einfachplanetenbauweise ausgeführt. Die vom Antrieb her gesehen ersten beiden Planetenradsätze bilden einen schaltbaren Vorschaltradsatz und sind über zwei Koppelwellen fest miteinander verbunden, wobei die erste Koppelwelle dieses Vorschaltradsatzes dessen beide Sonnenräder fest miteinander und fest mit der Antriebswelle des Getriebes verbindet, und wobei die zweite Koppelwelle des Vorschaltradsatzes das Hohlrad des ersten Planetenradsatzes und den Steg des zweiten Planetenradsatzes fest miteinander verbindet und gleichzeitig die Ausgangswelle des Vorschaltradsatzes bildet. Die anderen beiden Elemente des Vorschaltradsatzes - also der Steg des ersten Planetenradsatzes und das Hohlrad des zweiten Planetenradsatzes - sind jeweils über eine eigene Bremse am Getriebegehäuse festsetzbar. Der dritte und vierte Planetenradsatz bilden einen schaltbaren Hauptradsatz und sind ebenfalls über zwei Koppelwellen fest miteinander verbunden, wobei die erste Koppelwelle dieses Hauptradsatzes dessen beide Sonnenräder fest miteinander verbindet und mit der Antriebswelle des Getriebes verbindbar ist, und wobei die zweite Koppelwelle des Hauptradsatzes den Steg des dritten Planetenradsatzes fest mit dem Hohlrad des vierten Planetenradsatzes verbindet und ebenfalls mit der Antriebswelle verbindbar ist und wahlweise auch über eine Bremse am Getriebegehäuse festsetzbar ist. Das Hohlrad des dritten Planetenradsatzes als weiteres Eingangselement des Hauptradsatzes ist mit der Ausgangswelle des Vorschaltradsatzes fest verbunden und über eine weitere Bremse am Getriebegehäuse festsetzbar. Der Steg des vierten Planetenradsatzes schließlich bildet das Ausgangselement des Hauptradsatzes und ist fest mit der Abtriebswelle des Getriebes verbunden. Das Getriebe weist insgesamt neun gruppenschaltungsfrei schaltbare Vorwärtsgänge und einen Rückwärtsgang auf, die durch selektives paarweises Sperren von jeweils zwei der sechs Schaltelemente erzielt werden.

Weiterhin ist aus der US 6176803 B1 ein 9-Gang-Automatgetriebe mit vier koaxial zueinander angeordneten und miteinander gekoppelten schaltbaren Einfach-Planetenradsätzen bekannt, das dem zuvor genannten Automatgetriebe gemäß US 4,683,776 im Aufbau stark ähnelt. Wie in der US 4,683,776 sind insgesamt sechs Reibschaltelemente vorgesehen, von denen zwei als Lamellenkupplung und vier als Lamellenbremse ausgeführt sind. Der vom Antrieb her gesehen erste der vier Planetenradsätze ist im Unterschied zur US 4,683,776 als ein so genannter Plus-Planetenradsatz in Doppelplanetenbauweise ausgeführt. Die anderen drei Planetenradsätze sind wie in der US 4,683,776 als so genannte Minus-Planetenradsätze in Einfachplanetenbauweise ausgeführt. Bis auf die Koppelung des Sonnenrades des zweiten Planetenradsatzes nunmehr mit dem Steg des ersten (Plus-)Planetenradsatzes ist die bauteilseitige Kopplung der Planetenradsätze untereinander, zu den beiden Kupplungen bzw. zur Antriebswelle, zu den vier Bremsen sowie zur Abtriebswelle vollkommen identisch ist zur US 4,683,776. Im Prinzip arbeitet also nur der Plus-Planetenradsatz als Vorschaltradsatz, wobei die anderen drei Planetenradsätze dann den Hauptradsatz des Getriebes bilden.

Ähnliche Mehrstufen-Automatgetriebe mit neun gruppenschaltungsfrei schaltbaren Vorwärtsgängen sind ferner aus der DE 4238025 A1 bekannt, umfassend vier koaxiale Einfach-Planetenradsätze und sechs oder sieben Reibschaltelemente (vier Lamellenbremsen und zwei oder drei Lamellenkupplungen). Dabei bilden die beiden vom Antrieb her gesehen ersten beiden Planetenradsätze stets einen mit der Antriebswelle des Getriebes fest verbundenen schaltbaren, über zwei Koppelwellen gekoppelten Vorschaltradsatz, bei dem einer seiner Planetenradsätze als Plus-Planetenradsatz in Doppelplanetenbauweise und der andere seiner Planetenradsätze als Minus-Planetenradsatz in Einfachplanetenbauweise ausgeführt sind. Die anderen beiden Planetenradsätze bilden einen als Zweisteg-Vierwellen-Planetengetriebe ausgeführten schaltbaren Hauptradsatz identisch zur US 4,683,776.

Automatisch schaltbare Fahrzeuggetriebe in Planetenbauweise im Allgemeinen sind im Stand der Technik also bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in PKW als auch NKW geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art mit zumindest acht gruppenschaltungsfrei schaltbaren Vorwärtsgängen und zumindest einem Rückwärtsgang vorzuschlagen, bei dem unter Verwendung von insgesamt vier Planetenradsätzen eine möglichst geringe Anzahl an Schaltelementen benötigt wird. Zudem soll das Getriebe eine große Spreizung bei vergleichsweise harmonischer Gangabstufung aufweisen und in den Hauptfahrgängen einen günstigen Wirkungsgrad - also vergleichsweise geringe Schlepp- und Verzahnungsverluste - aufweisen.

Diese Aufgabe wird erfindungsgemäß durch ein Mehrstufengetriebe mit den Merkmalen des Patentanspruchs 1 gelöst. Weitere vorteilhafte Ausgestaltungen und Weiterbildungen gehen aus den Unteransprüchen hervor.

Demnach wird ein erfindungsgemäßes Mehrstufengetriebe in Planetenbauweise vorgeschlagen, welches eine Antriebswelle, eine Abtriebswelle, vier Planetenradsätze, mindestens acht drehbare Wellen sowie fünf Schaltelemente - zwei Bremsen und drei Kupplungen - aufweist, deren selektives Eingreifen verschiedene Übersetzungsverhältnisse zwischen der Antriebswelle und der Abtriebswelle bewirkt, so dass acht Vorwärtsgänge und ein Rückwärtsgang realisierbar sind.

Gemäß der Erfindung sind ein Steg des vierten Planetenradsatzes und die Antriebswelle verdrehfest miteinander verbunden und bilden die erste drehbare Welle des Getriebes. Ein Steg des dritten Planetenradsatzes und die Abtriebswelle sind verdrehfest miteinander verbunden und bilden die zweite drehbare Welle des Getriebes. Ein Sonnenrad des ersten Planetenradsatzes und ein Sonnenrad des vierten Planetenradsatzes sind verdrehfest miteinander verbunden und bilden die dritte drehbare Welle des Getriebes. Ein Hohlrad des ersten Planetenradsatzes bildet die vierte drehbare Welle des Getriebes. Ein Hohlrad des zweiten Planetenradsatzes und ein Sonnenrad des dritten Planetenradsatzes sind verdrehfest miteinander verbunden und bilden die fünfte drehbare Welle des Getriebes. Ein Steg des ersten Planetenradsatzes und ein Hohlrad des dritten Planetenradsatzes sind verdrehfest miteinander verbunden und bilden die sechste drehbare Welle des Getriebes. Ein Sonnenrad des zweiten Planetenradsatzes und ein Hohlrad des vierten Planetenradsatzes sind verdrehfest miteinander verbunden und bilden die siebte drehbare Welle des Getriebes. Ein Steg des zweiten Planetenradsatzes bildet die achte drehbare Welle des Getriebes.

Hinsichtlich der Anbindung der fünf Schaltelemente an die verschiedenen Elemente des Planetenradsätze und an die Antriebswelle des Getriebes wird gemäß der Erfindung vorgeschlagen, dass das erste Schaltelement im Kraftfluss zwischen der dritten Welle und einem Gehäuse des Getriebes angeordnet ist, dass das zweite Schaltelement im Kraftfluss zwischen der vierten Welle und dem Gehäuse des Getriebes angeordnet ist, und dass das dritte Schaltelement im Kraftfluss zwischen der fünften und der ersten Welle angeordnet ist. Weiterhin ist gemäß der Erfindung das vierte Schaltelement im Kraftfluss entweder zwischen der achten und der zweiten Welle oder aber zwischen der achten und der sechsten Welle angeordnet. Das fünfte Schaltelement ist gemäß der Erfindung im Kraftfluss entweder zwischen der siebten und der fünften Welle oder aber zwischen der siebten und der achten Welle oder aber zwischen der fünften und der achten Welle angeordnet. Durch diese verschiedenen kinematischen Kopplungen der Schaltelemente an die verschiedenen Wellen des Getriebes ergibt sich erfindungsgemäß somit eine ganze Getriebefamilie.

Alle vier Planetenradsätze sind also vorzugsweise als so genannte Minus-Planetenradsätze ausgeführt, deren jeweilige Planetenräder mit Sonnenrad und Hohlrad des jeweiligen Planetenradsatzes kämmen. Hinsichtlich der räumlichen Anordnung der vier Planetenradsätze im Gehäuse des Getriebes wird in einer vorteilhaften Ausgestaltung vorgeschlagen, alle vier Planetenradsätze koaxial zueinander nebeneinander anzuordnen, in einer Reihenfolge "zweiter, vierter, erster, dritter Planetenradsatz". Für eine Anwendung mit koaxial zueinander verlaufender Antriebs- und Abtriebswelle ist es in diesem Fall zweckmäßig, dass der zweite Planetenradsatz der dem Antrieb des Getriebes zugewandte Planetenradsatz der erfindungsgemäßen Planetenradsatzgruppe ist.

Durch die erfindungsgemäße Ausgestaltung des Mehrstufengetriebes ergeben sich insbesondere für Personenkraftwagen geeignete Übersetzungen mit großer Gesamtspreizung in harmonischer Gangabstufung, wodurch ein guter Fahrkomfort und eine signifikante Verbrauchsabsenkung erzielt werden.

Darüber hinaus wird mit dem erfindungsgemäßen Mehrstufengetriebe durch eine geringe Anzahl an Schaltelementen, nämlich zwei Bremsen und drei Kupplungen, der Bauaufwand vergleichsweise gering. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich hierfür eine der beiden Bremsen, die im ersten und zweiten Vorwärtsgang und im Rückwärtsgang betätigt wird.

Darüber hinaus ergibt sich bei dem erfindungsgemäßen Mehrstufengetriebe in allen Gängen ein guter Wirkungsgrad einerseits infolge geringer Schleppverluste, da in jedem Gang jeweils nur zwei Schaltelemente nicht im Eingriff sind, andererseits auch infolge geringer Verzahnungsverluste in den einfach aufgebauten Einzel-Planetenradsätzen.

Außerdem ist das erfindungsgemäße Mehrstufengetriebe derart konzipiert, dass eine Anpassbarkeit an unterschiedliche Triebstrangausgestaltungen sowohl in Kraftflussrichtung als auch in räumlicher Hinsicht ermöglicht wird. So ist es beispielsweise ohne besondere konstruktive Maßnahmen möglich, Antrieb und Abtrieb des Getriebes wahlweise koaxial oder achsparallel zueinander anzuordnen.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungsbeispiels eines erfindungsgemäßen Mehrstufengetriebes;
- Figur 2: ein beispielhaftes Schaltschema für das Mehrstufengetriebe gemäß Figur 1;
- Figur 3: eine beispielhafte erste Bauteilanordnungs-Variante für das Mehrstufengetriebe gemäß Figur 1;
- Figur 4: eine beispielhafte zweite Bauteilanordnungs-Variante für das Mehrstufengetriebe gemäß Figur 1;
- Figur 5: eine schematische Darstellung eines zweiten Ausführungsbeispiels eines erfindungsgemäßen Mehrstufengetriebes;
- Figur 6: eine schematische Darstellung eines dritten Ausführungsbeispiels eines erfindungsgemäßen Mehrstufengetriebes;
- Figur 7: eine schematische Darstellung eines vierten Ausführungsbeispiels eines erfindungsgemäßen Mehrstufengetriebes;
- Figur 8: eine beispielhafte Bauteilanordnungs-Variante für das Mehrstufengetriebe gemäß Figur 7;
- Figur 9: eine schematische Darstellung eines fünften Ausführungsbeispiels eines erfindungsgemäßen Mehrstufengetriebes;
- Figur 10: eine schematische Darstellung eines sechsten Ausführungsbeispiels eines erfindungsgemäßen Mehrstufengetriebes;
- Figur 11: eine beispielhafte erste Ausgestaltungsvariante für das Mehrstufengetriebe gemäß Figur 4;
- Figur 12: eine beispielhafte zweite Ausgestaltungsvariante für das Mehrstufengetriebe gemäß Figur 4;
- Figur 13: eine beispielhafte dritte Ausgestaltungsvariante für das Mehrstufengetriebe gemäß Figur 4;
- Figur 14: eine beispielhafte erste Ausgestaltungsvariante für das Mehrstufengetriebe gemäß Figur 8;
- Figur 15: eine beispielhafte zweite Ausgestaltungsvariante für das Mehrstufengetriebe gemäß Figur 8; und
- Figur 16: eine beispielhafte dritte Bauteilanordnungs-Variante für das Mehrstufengetriebe gemäß Figur 1.

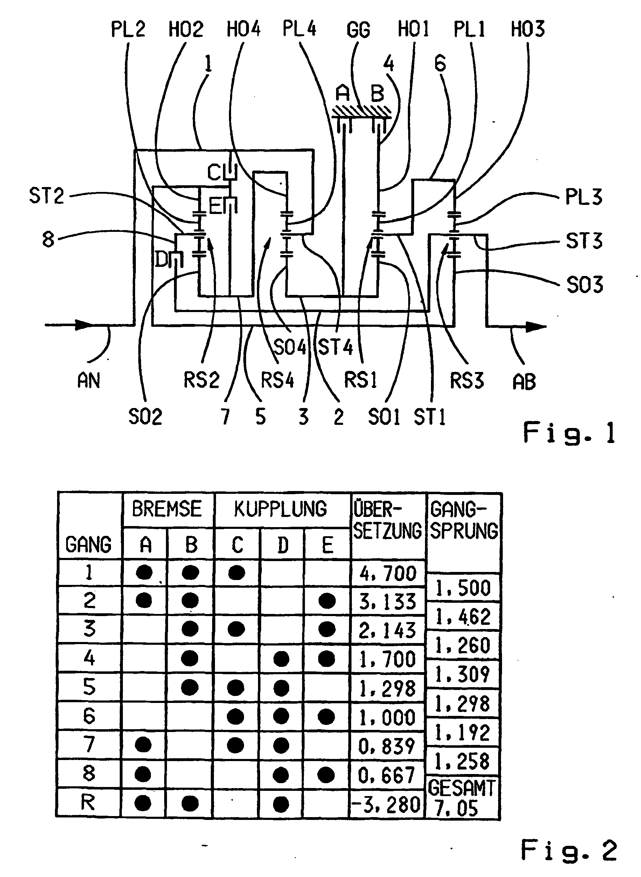

In Figur 1 ist ein erstes Ausführungsbeispiel einer erfindungsgemäßen Mehrstufengetriebes dargestellt. Das Getriebe umfasst eine Antriebswelle AN, und eine Abtriebswelle AB, sowie vier Planetenradsätze RS1, RS2, RS3, RS4 und fünf Schaltelemente A, B, C, D, E, die alle in einem Gehäuse GG des Getriebes angeordnet sind. Alle vier Planetenradsätze RS1, RS2, RS3, RS4 sind als einfache Minus-Planetenradsätze ausgebildet und in diesem Ausführungsbeispiel in axialer Richtung in der Reihenfolge RS2, RS4, RS1, RS3 koaxial hintereinander angeordnet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit HO1, HO2, HO3 und HO4 bezeichnet, die Sonnenräder mit SO1, SO2, SO3 und SO4, die Planetenräder mit PL1, PL2, PL3 und PL4, und die Stege, an denen die genannten Planetenräder rotierbar gelagert sind, mit ST1, ST2, ST3 und ST4. Die Schaltelemente A und B sind als Bremsen ausgebildet, die im dargestellten Ausführungsbeispiel beide als reibschlüssig schaltbare Lamellenbremse ausgeführt sind, selbstverständlich in einer anderen Ausgestaltung auch als reibschlüssig schaltbare Bandbremse oder beispielsweise auch als formschlüssig schaltbare Klauen- oder Konusbremse ausgeführt sein können. Die Schaltelemente C, D und E sind als Kupplungen ausgebildet, die im dargestellten Ausführungsbeispiel alle als reibschlüssig schaltbare Lamellenkupplung ausgeführt sind, selbstverständlich in einer anderen Ausgestaltung beispielsweise auch als formschlüssig schaltbare Klauen- oder Konuskupplung ausgeführt sein können.

Mit diesen fünf Schaltelementen A bis E ist ein selektives Schalten von acht Vorwärtsgängen und zumindest einem Rückwärtsgang realisierbar. Das erfindungsgemäße Mehrstufengetriebe weist insgesamt zumindest acht drehbare Wellen auf, die mit 1 bis 8 bezeichnet sind.

Hinsichtlich der Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 1 folgendes vorgesehen: Der Steg ST4 des vierten Planetenradsatzes RS4 und die Antriebswelle AN sind verdrehfest miteinander verbunden und bilden die erste Welle 1 des Getriebes. Der Steg ST3 des dritten Planetenradsatzes RS3 und die Abtriebswelle AB sind drehfest miteinander verbunden und bilden die zweite Welle 2 des Getriebes. Das Sonnenrad SO1 des ersten Planetenradsatzes RS1 und das Sonnenrad SO4 des vierten Planetenradsatzes RS4 sind verdrehfest miteinander verbunden und bilden die dritte Welle 3 des Getriebes. Das Hohlrad HO1 des ersten Planetenradsatzes RS1 bildet die vierte Welle 4 des Getriebes. Das Hohlrad HO2 des zweiten Planetenradsatzes RS2 und das Sonnenrad SO3 des dritten Planetenradsatzes RS3 sind verdrehfest miteinander verbunden und bilden die fünfte Welle 5 des Getriebes. Der Steg ST1 des ersten Planetenradsatzes RS1 und das Hohlrad HO3 des dritten Planetenradsatzes RS3 sind verdrehfest miteinander verbunden und bilden die sechste Welle 6 des Getriebes. Das Sonnenrad SO2 des zweiten Planetenradsatzes RS2 und das Hohlrad HO4 des vierten Planetenradsatzes RS4 sind verdrehfest miteinander verbunden und bilden die siebte Welle 7 des Getriebes. Der Steg ST2 des zweiten Planetenradsatzes RS2 bildet die achte Welle 8 des Getriebes.

Hinsichtlich der Kopplung der fünf Schaltelemente A bis E an die so beschriebenen Wellen 1 bis 8 des Getriebes ist bei dem Mehrstufengetriebe gemäß Figur 1 folgendes vorgesehen: Das erste Schaltelement A ist im Kraftfluss zwischen der dritten Welle 3 und dem Getriebegehäuse GG angeordnet. Das zweite Schaltelement B ist im Kraftfluss zwischen der vierten Welle 4 und dem Getriebegehäuse GG angeordnet. Das dritte Schaltelement C ist im Kraftfluss zwischen der fünften Welle 5 und der ersten Welle 1 angeordnet. Das vierte Schaltelement D ist im Kraftfluss zwischen der achten Welle 8 und der zweiten Welle 2 angeordnet ist. Das fünfte Schaltelement E schließlich ist im Kraftfluss zwischen der siebten Welle 7 und der fünften Welle 5 angeordnet.

In dem in Figur 1 dargestellten Ausführungsbeispiel ist der zweite Planetenradsatz RS2 der antriebsnahe Radsatz des Getriebes und der dritte Planetenradsatz RS3 der abtriebsnahe Radsatz des Getriebes, wobei Antriebswelle AN und Abtriebswelle AB beispielhaft koaxial zueinander angeordnet sind. Dem Fachmann ist leicht ersichtlich, dass dieses Getriebe ohne besonderen Aufwand derart modifizierbar ist, dass Antriebs- und Abtriebswelle nicht mehr koaxial zueinander angeordnet sind, beispielsweise achsparallel oder winklig zueinander. Bei einer derartigen Anordnung wird der Fachmann bei Bedarf auch den Antrieb des Getriebes nahe dem dritten Planetenradsatz RS3, also auf der dem ersten Planetenradsatz RS1 abgewandten Seite des dritten Planetenradsatzes RS3 anordnen.

Entsprechend der räumlichen Anordnung der vier Radsätze in axialer Richtung gesehenen in der Folge "RS2, RS4, RS1, RS3" verläuft die zweite Welle 2 des Getriebes abschnittsweise zentrisch innerhalb der dritten Welle 3 und abschnittsweise zentrisch innerhalb der siebten Welle 7. Dabei verläuft die fünfte Welle 5 einerseits abschnittsweise zentrisch innerhalb dieser zweiten Welle 2, andererseits umgreift ein Abschnitt der fünften Welle 5 die Kupplung D und den zweiten Planetenradsatz RS2 in axialer und radialer Richtung vollständig. Die erste Welle 1 des Getriebes übergreift den zweiten und vierten Planetenradsatz RS2, RS4 sowie die Kupplungen D, C, E in axialer und radialer Richtung vollständig, die Kupplungen D, C, E sind also innerhalb eines Zylinderraums angeordnet, der durch die Welle 1 gebildet wird.

Wie aus Figur 1 weiterhin ersichtlich, sind die beiden Bremsen A, B im dargestellten Ausführungsbeispiel räumlich gesehen axial unmittelbar nebeneinander in einem Bereich radial oberhalb der Planetenradsätze RS1 und RS4 angeordnet, wobei die Bremse B zumindest teilweise radial über dem ersten Planetenradsatz RS1 angeordnet ist, und wobei die Bremse A zumindest teilweise in einem Bereich axial zwischen den beiden Planetenradsätzen RS4 und RS1 angeordnet ist. Die kinematische Anbindung der beiden Bremsen A, B an die beiden Planetenradsätzen RS4 und RS1 bedingt, dass die Bremse B näher am dritten Planetenradsatz RS3 bzw. näher am Abtrieb des Getriebes angeordnet ist als die Bremse A. Selbstverständlich ist die in Figur 1 dargestellte räumliche Anordnung der beiden Bremsen A, B als beispielhaft zu verstehen. So kann die Bremse A beispielsweise auch zumindest teilweise radial über dem vierten Planetenradsatz RS4 angeordnet sein. Je nach dem zur Verfügung stehenden Bauraum für das Getriebegehäuse GG im Fahrzeug kann in einer anderen Ausgestaltung beispielsweise auch vorgesehen sein, dass die beiden Bremsen A, B - ausgehend von der Darstellung in Figur 1 - axial verschoben in einem Bereich radial über den Planetenradsätzen RS2 und RS4 oder radial über den Planetenradsätzen RS3 und RS1 oder axial vollständig zwischen den Planetenradsätzen RS4 und RS1 angeordnet sind. Je nach dem zur Verfügung stehenden Bauraum kann die Bremse A auch beispielsweise radial innerhalb eines Zylinderraums angeordnet sein, der durch die Bremse B gebildet wird.

Wie aus Figur 1 weiterhin ersichtlich, sind die beiden Kupplungen C und E radial betrachtet im Wesentlichen übereinander und axial betrachtet zwischen dem zweiten Planetenradsatz RS2 und dem vierten Planetenradsatz RS4 angeordnet, wobei das Lamellenpaket der Kupplung C zumindest überwiegend radial über dem Lamellenpaket der Kupplung E angeordnet ist. Zweckmäßigerweise kann für beide Kupplungen C, E ein gemeinsamer Lamellenträger vorgesehen sein, der beispielsweise als Innenlamellenträger für das radial äußere Lamellenpaket der Kupplung C und als Außenlamellenträger für das radial innere Lamellenpaket der Kupplung E ausgeführt ist. Zur Vereinfachung nicht dargestellte Servoeinrichtungen der beiden Kupplungen C, E können beispielsweise zusammen mit dem genannten gemeinsamen Lamellenträger und den beiden genannten Lamellenpaketen zu einer vormontierbaren Baugruppe zusammengefasst werden, sodass beide Servoeinrichtungen dann stets mit Drehzahl des Hohlrads HO2 des zweiten Planetenradsatzes RS2 rotieren. Beide Servoeinrichtungen können einen dynamischen Druckausgleich aufweisen zur Kompensation des rotatorischen Drucks ihrer rotierenden Druckräume. Beispielsweise kann die Servoeinrichtung der Kupplung C aber auch separat an dem für die beiden Kupplungen C, E gemeinsamen Lamellenträger und die Servoeinrichtung der Kupplung E separat an dem Sonnenrad SO2 des zweiten Planetenradsatzes RS2 axial verschiebbar gelagert sein. Beispielsweise kann die Servoeinrichtung der Kupplung C auch an der Antriebswelle AN axial verschiebbar gelagert sein, sodass sie stets mit Antriebsdrehzahl des Getriebes rotiert.

Wie aus Figur 1 weiterhin ersichtlich, ist die Kupplung D räumlich betrachtet auf der dem vierten Planetenradsatz RS4 abgewandten Seite des zweiten Planetenradsatzes RS2 angeordnet, axial unmittelbar angrenzend an diesen zweiten Planetenradsatzes RS2. Im dargestellten Beispiel weist das Lamellenpaket der Kupplung D einen vergleichsweise kleinen Durchmesser auf, entsprechend der kinematischen Anbindung der Kupplung D an den Steg ST2 des zweiten Planetenradsatzes RS2. Selbstverständlich kann die Kupplung D in einer anderen Ausgestaltung des Getriebes durch einfache Umkonstruktion auch auf einem größeren Durchmesser angeordnet sein, beispielsweise axial neben dem Hohlrad HO2 des zweiten Planetenradsatzes RS2 oder auch axial zwischen dem ersten und dritten Planetenradsatz RS1, RS3. Eine zur Vereinfachung nicht dargestellte Servoeinrichtung der Kupplung D kann derart angeordnet sein, dass sie stets mit Drehzahl des Stegs ST2 des zweiten Planetenradsatzes RS2 rotiert, oder dass sie stets mit Drehzahl des Stegs ST3 des dritten Planetenradsatzes RS3 rotiert. Selbstverständlich kann auch die Servoeinrichtung der Kupplung D einen dynamischen Druckausgleich aufweisen zur Kompensation des rotatorischen Drucks ihres rotierenden Druckraums.

In Figur 2 ist ein beispielhaftes Schaltschema des erfindungsgemäßen Mehrstufengetriebes gemäß Figur 1 dargestellt. In jedem Gang sind drei Schaltelemente geschlossen und zwei Schaltelemente offen. Neben der Schaltlogik können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 2,10, minus 1,60, minus 3,70 und minus 2,00. Des weiteren kann dem Schaltschema entnommen werden, dass bei sequentieller Schaltweise Doppelschaltungen bzw. Gruppenschaltungen vermieden werden, da zwei in der Schaltlogik benachbarte Gangstufen zwei Schaltelemente gemeinsam benutzen. Der sechste Gang ist vorzugsweise als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schließen der Bremse B und der Kupplungen D und E, der fünfte Vorwärtsgang durch Schließen der Bremse B und der Kupplungen C und D, der sechste Vorwärtsgang durch Schließen der Kupplungen C, D und E, der siebte Vorwärtsgang durch Schließen der Bremse A und der Kupplungen C und D, sowie der achte Vorwärtsgang durch Schließen der Bremse A und der Kupplungen D und E. Wie aus dem Schaltschema weiter ersichtlich, ergibt sich der Rückwärtsgang durch Schließen der Bremsen A und B und der Kupplung D.

Gemäß der Erfindung ist ein Anfahren des Kraftfahrzeugs mit einem im Getriebe integrierten Schaltelement möglich. Hierbei ist ein Schaltelement besonders geeignet, das sowohl im ersten Vorwärtsgang als auch im Rückwärtsgang benötigt wird, hier also vorzugsweise die Bremse A oder die Bremse B. In vorteilhafter Weise werden diese beiden Bremsen A, B auch im zweiten Vorwärtsgang benötigt. Wird die Bremse B als im Getriebe integriertes Anfahrelement genutzt, so ist damit sogar ein Anfahren in den ersten fünf Vorwärtsgängen und dem Rückwärtsgang möglich. Wie aus dem Schaltschema ersichtlich, kann zum Anfahren in Vorwärtsfahrtrichtung auch die Kupplung C und zum Anfahren in Rückwärtsfahrtrichtung die Kupplung D als getriebeinternes Anfahrelement verwendet werden.

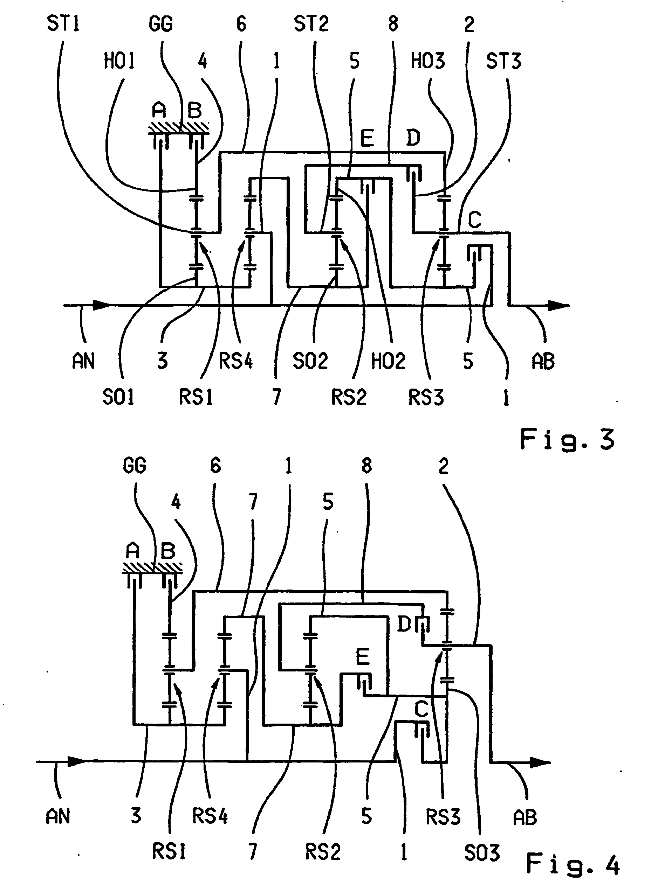

Die räumliche Anordnung der Schaltelemente des in Figur 1 dargestellten Ausführungsbeispiels eines erfindungsgemäßen Mehrstufengetriebes innerhalb des Getriebes kann im Prinzip beliebig sein und wird nur durch die Abmessungen und die äußere Formgebung des Getriebegehäuses GG begrenzt. Entsprechend sind in den Figuren 3 und beispielhaft zwei Bauteilanordnungs-Varianten des Mehrstufengetriebes gemäß Figur 1 dargestellt, wobei alle kinematischen Kopplungen der Radsatzelemente, Schaltelemente und Wellen untereinander unverändert aus Figur 1 übernommen sind. Bei beiden Bauteilanordnungs-Varianten gemäß Figur 3 und Figur 4 sind die vier Planetenradsätze RS1 bis RS4 nunmehr in axialer Richtung in der Reihenfolge RS1, RS4, RS2, RS3 koaxial hintereinander angeordnet. Antriebswelle AN und Abtriebswelle AB sind wie in Figur 1 beispielhaft koaxial zueinander angeordnet, sodass nunmehr der erste Planetenradsatz RS1 der antriebsnahe Radsatz des Getriebes ist, wobei der dritte Planetenradsatz RS3 wie in Figur 1 der abtriebsnahe Radsatz des Getriebes ist. Selbstverständlich sind die im Rahmen der Beschreibung der Figur 1 getroffenen Aussagen hinsichtlich der Möglichkeiten, die relative räumliche Lage von Antriebs- und Abtriebswelle AN, AB bzw. von An- und Abtrieb des Getriebes auch auf die Ausführungsbeispiele gemäß Figur 3 und Figur 4 sinngemäß übertragbar.

Entsprechend der gegenüber Figur 1 geänderten räumlichen Lage der vier Planetenradsätze RS1 bis RS4 relativ zueinander ergibt sich gemäß Figur 3 bzw. Figur 4 auch eine gegenüber Figur 1 geänderte zweckmäßige räumliche Anordnung der fünf Schaltelemente A bis E innerhalb des Getriebegehäuses GG relativ zu den Radsätzen. Bei diesen beiden Bauteilanordnungs-Varianten ist die mit dem Hohlrad HO1 des ersten Planetenradsatzes RS1 bzw. mit der Welle 4 verbundene Bremse B zweckmäßigerweise zumindest teilweise in einem Bereich radial über der ersten Planetenradsatz RS1 angeordnet. Die mit dem Sonnenrad SO1 des ersten Planetenradsatzes RS1 bzw. mit der Welle 3 verbundene Bremse A ist nunmehr auf der dem vierten Planetenradsatz RS4 bzw. auf der den anderen Radsätzen abgewandten Seite des ersten Planetenradsatzes RS1 angeordnet, nahe dem Antrieb des Getriebes. Dabei weisen die Lamellenpakete dieser beiden Bremsen hier beispielhaft einen zumindest ähnlichen Durchmesser auf. Die Bremse A kann auch konstruktiv einfach in einer antriebsnahen Gehäusewand des Getriebegehäuses GG integriert sein. Zur Einsparung von axialer Baulänge des Getriebes kann in einer anderen Ausgestaltung aber auch vorgesehen sein, dass bei unverändert axial nebeneinander angeordneten Lamellenpaketen die Bremse A zumindest teilweise in einem Bereich radial über dem ersten Planetenradsatz RS1 und die Bremse B zumindest teilweise in einem Bereich radial über dem vierten Planetenradsatz RS4 angeordnet ist. In noch einer anderen Ausgestaltung kann beispielsweise auch vorgesehen sein, dass die beiden Bremsen A, B nicht axial nebeneinander, sondern radial übereinander angeordnet sind.

In der in Figur 3 dargestellten beispielhaften ersten Bauteilanordnungs-Variante des Mehrstufengetriebes gemäß Figur 1 sind die Lamellenpakete der beiden Kupplungen D, E nunmehr in einem Bereich axial zwischen dem zweiten und dritten Planetenradsatz RS2, RS3 angeordnet, beispielhaft axial nebeneinander, um die Lamellenpakete beider Kupplungen D, E auf einem möglichst großen Durchmesser anordnen zu können. Dabei ist das Lamellenpaket der Kupplung E näher am zweiten Planetenradsatz RS2 angeordnet als das Lamellenpaket der Kupplung D. Dabei umgreift die Welle 8 des Getriebes, die ja die Wirkverbindung zwischen dem Steg ST2 des zweiten Planetenradsatzes RS2 und der Kupplung D bildet, den zweiten Planetenradsatz RS2 und die Kupplung E in axialer Richtung vollständig, die Kupplung E ist also innerhalb eines Zylinderraums angeordnet, der durch die Welle 8 gebildet wird. Je nach dem für den Einbau des Getriebes in das Fahrzeug zur Verfügung stehenden Bauraum kann es aber auch zweckmäßig sein, das Lamellenpaket der Kupplung D in etwa radial über dem Lamellenpaket der Kupplung E anzuordnen. Die Welle 6 des Getriebes, die ja die Wirkverbindung zwischen dem Steg ST1 des ersten Planetenradsatzes RS1 und dem Hohlrad HO3 des dritten Planetenradsatzes RS3 bildet, übergreift in ihrem axialen Verlauf den vierten und zweiten Planetenradsatz RS4, RS2 sowie die beiden Kupplungen E, D vollständig. In einer anderen Ausgestaltung kann die Kupplung D räumlich gesehen auch axial zwischen dem zweiten Planetenradsatz RS2 und dem vierten Planetenradsatz RS4 angeordnet sein.

Wie aus Figur 3 weiterhin ersichtlich, ist die Kupplung C nunmehr auf der dem zweiten Planetenradsatz RS2 bzw. auf der den anderen Radsätzen abgewandten Seite des dritten Planetenradsatzes RS3 angeordnet, axial unmittelbar an diesen dritten Planetenradsatz RS3 angrenzend. Entsprechend der in Figur 3 dargestellten Anwendung als Getriebe für einen "Standard-Antrieb" mit koaxialem An- und Abtrieb und der kinematisch bedingten Kopplung der Abtriebswelle AB an den Steg ST3 des dritten Planetenradsatzes RS3 ist der Durchmesser des Lamellenpaketes der Bremse C vergleichsweise klein und die zur sicheren Drehmoment-Übertragung erforderliche Lamellenanzahl der Bremse C vergleichsweise groß. Diese daraus resultierende vergleichsweise große axiale Erstreckung der Kupplung C wirkt sich für einen "Standard-Antrieb" allerdings infolge der üblichen Kardantunnelkontur des Fahrzeugs nicht nachteilig aus. Soll das Getriebe hingegen beispielsweise mit einem zum Antrieb achsparallelen Abtrieb versehen werden, so steht durch die hierfür notwendige Verlegung der Abtriebswelle ein großer Durchmesser für die Anordnung der Kupplung C dann im Bereich zwischen dem mit dem Steg ST3 verbundenen Abtriebsstirnrad und der Gehäuseaußenwand zur Verfügung.

Entsprechend der räumlichen Anordnung der vier Radsätze in axialer Richtung gesehenen in der Folge "RS1, RS4, RS2, RS3" werden die vier Planetenradsätze RS1 bis RS4 jeweils höchstens von einer Welle, gemäß Figur 3 von der Antriebswelle AN bzw. der Welle 1 des Getriebes in axialer Richtung zentrisch durchgriffen. Die ist besonders vorteilhaft einerseits für die Dimensionierung der Antriebswelle AN und der Radsätze, andererseits auch für die vergleichsweise einfache Schmiermittelzuführung zu den Planetenrädern der vier Planetenradsätze RS1, RS2, RS3, RS4 und für die vergleichsweise einfache Druck- und Schmiermittelzuführung zu den drei Kupplungen E, D, C. Bei dem in Figur 3 dargestellten Ausführungsbeispiel mit koaxialer Anordnung von Antriebs- und Abtriebswelle AN, AB durchgreift die Antriebswelle AN bzw. der Welle 1 des Getriebes alle vier Planetenradsätze RS1 bis RS4 und in ihrem axialen Verlauf die dritte Welle 3, die siebte Welle 7 und die fünfte Welle 5 zentrisch. Ist in einer anderen Ausgestaltung mit nicht koaxialer Antriebs- und Abtriebswelle der Antrieb des Getriebes abweichend zu Figur 3 nahe dem dritten Planetenradsatz RS3 bzw. nahe der Kupplung C angeordnet sein, so kann die Welle 3 auch direkt an einer entsprechend ausgebildeten gehäusefesten Nabe der dann dem Antrieb gegenüberliegenden Gehäuseaußenwand verdrehbar gelagert sein, wobei dann die Antriebswelle AN bzw. die Welle 1 nur die beiden Planetenradsätze RS3 und RS2 (und die Kupplungen C, D, E) in axialer Richtung zentrisch vollständig durchgreift.

Die in Figur 4 dargestellten beispielhafte zweite Bauteilanordnungs-Variante des Mehrstufengetriebes gemäß Figur 1 unterscheidet sich von dem zuvor anhand Figur 3 beschrieben Ausführungsbeispiel insbesondere durch eine modifizierte konstruktive Ausbildung der Kupplung E und der räumlichen Anordnung der Kupplung C.

Wie aus Figur 4 ersichtlich, ist die Kupplung E ähnlich wie in Figur 3 räumlich gesehen axial zwischen dem zweiten und dritten Planetenradsatz RS2, RS3 und dabei axial unmittelbar angrenzend an den zweiten Planetenradsatz RS2 angeordnet. Während in Figur 3 der Außenlamellenträger der Kupplung E mit der Welle 5 (bzw. mit dem Hohlrad HO2 des zweiten Planetenradsatzes RS2) und der Innenlamellenträger der Kupplung E mit der Welle 7 (bzw. mit dem Sonnenrad SO2 des zweiten Planetenradsatzes RS2) verdrehfest verbunden ist, ist in Figur 4 der Außenlamellenträger der Kupplung E nunmehr mit der Welle 7 und der Innenlamellenträger der Kupplung E entsprechend mit der Welle 5 verdrehfest verbunden. Diese konstruktive Ausbildung ist günstig, wenn die - zur Vereinfachung nicht näher dargestellte - Servoeinrichtung der Kupplung E auf der dem Planetenradsatz RS2 zugewandten Seite des ihr zugeordneten Lamellenpaketes der Kupplung E angeordnet sein soll und dann stets mit Drehzahl der siebten Welle 7 rotiert. Selbstverständlich ist die in Figur 4 dargestellte konstruktive Ausbildung der Kupplung E auch auf das in Figur 3 dargestellte Ausführungsbeispiel übertragbar.

Wie aus Figur 4 weiterhin ersichtlich, ist die Kupplung C im Unterschied zu Figur 3 räumlich gesehen nunmehr axial zwischen dem zweiten und dritten Planetenradsatz RS2, RS3 und dabei axial unmittelbar angrenzend an den dritten Planetenradsatz RS3 angeordnet. Die in Figur 4 dargestellte Anordnung dieser Kupplung C auf einem vergleichsweise kleinen Durchmesser im Bereich nahe dem Sonnenrad SO3 des dritten Planetenradsatzes RS3, ist selbstverständlich nur als beispielhaft anzusehen; in einer modifizierten Ausgestaltung kann die Kupplung C auch auf einem größeren Durchmesser angeordnet sein.

Entsprechend der räumlichen Anordnung der vier Radsätze in axialer Richtung gesehenen in der Folge "RS1, RS4, RS2, RS3" werden die vier Planetenradsätze RS1 bis RS4 auch in dem Ausführungsbeispiel gemäß Figur 4 jeweils höchstens von einer Welle des Getriebes in axialer Richtung zentrisch durchgriffen: die Planetenradsätze RS1, RS4 und RS2 von der Antriebswelle AN bzw. der Welle 1, der Planetenradsatz RS3 höchstens von einem Abschnitt der fünften Welle 5.

Anhand der folgenden Figuren werden weitere Ausführungsbeispiele für ein erfindungsgemäßes Mehrstufengetriebe beschrieben, die alle mit der gleichen Schaltlogik gemäß Figur 2 betreibbar sind.

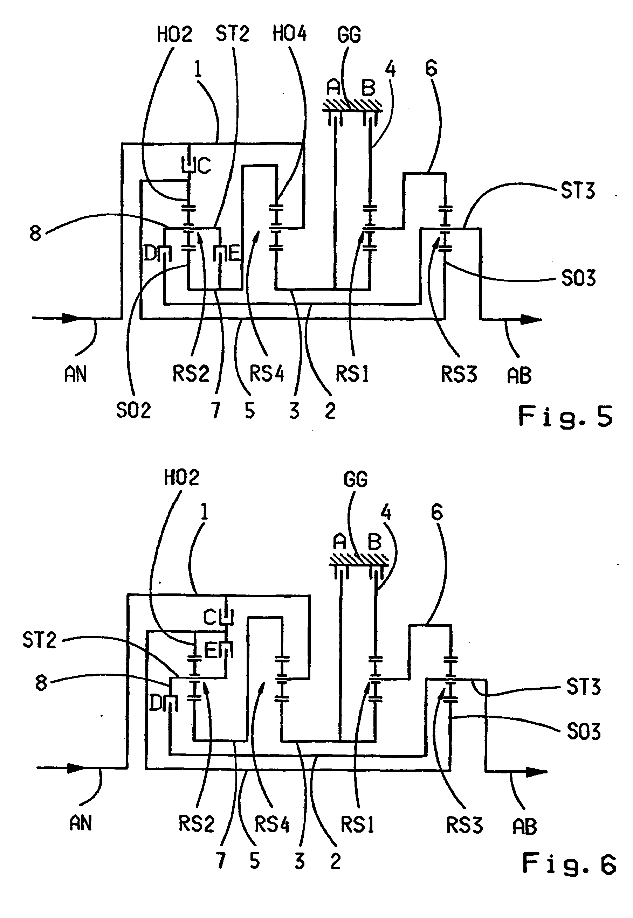

Figur 5 zeigt eine schematische Darstellung eines zweiten Ausführungsbeispiels eines erfindungsgemäßen Mehrstufengetriebes, basierend auf dem zuvor im Detail beschriebenen ersten Ausführungsbeispiel gemäß Figur 1. Wie aus Figur 5 leicht ersichtlich, wurde die Getriebestruktur und die kinematischen Kopplungen der vier Planetenradsätze RS1, RS2, RS3, RS4 und der fünf Schaltelemente A, B, C, D, E untereinander und zur Antriebs- und Abtriebswelle AN, AB fast vollständig von Figur 1 übernommen. Der wesentliche Unterschied zu Figur 1 besteht lediglich in der kinematischen Kopplung des fünften Schaltelementes E an die Radsatzelemente. Gemäß Figur 5 ist vorgesehen, dass die Kupplung E nunmehr im Kraftfluss zwischen der siebten Welle 7 und der achten Welle 8 des Getriebes angeordnet ist. Im Unterschied zu Figur 1 ist nunmehr also die zwischen dem Sonnenrad SO2 des zweiten Planetenradsatzes RS2 und dem Hohlrad HO4 des vierten Planetenradsatzes RS4 vorgesehene Koppelwelle 7 über die Kupplung E mit dem Steg ST2 des zweiten Planetenradsatzes RS2 verbindbar.

Entsprechend ist hinsichtlich der räumlichen Anordnung der Kupplung E in Figur 5 vorgesehen, dass diese Kupplung E axial betrachtet zwischen den beiden genannten Planetenradsätzen RS 2 und RS4 angeordnet ist. Die räumliche Anordnung der Kupplung C ist also vollkommen losgelöst von der räumlichen Anordnung der Kupplung E zu betrachten. In Figur 5 ist diese Kupplung C beispielhaft in einem Bereich radial über dem zweiten Planetenradsatz RS2 angeordnet. Ein zur Vereinfachung nicht dargestellte Servoeinrichtung der Kupplung E kann zweckmäßigerweise an der Welle 7 axial verschiebbar gelagert sein und rotiert in diesem Fall stets mit Drehzahl dieser Welle 7. Ein zur Vereinfachung ebenfalls nicht dargestellte Servoeinrichtung der Kupplung C kann zweckmäßigerweise an der Welle 1 bzw. der Antriebswelle AN axial verschiebbar gelagert sein und rotiert in diesem Fall stets mit Antriebswellendrehzahl.

Figur 6 zeigt eine schematische Darstellung eines dritten Ausführungsbeispiels eines erfindungsgemäßen Mehrstufengetriebes, ebenfalls basierend auf dem zuvor im Detail beschriebenen ersten Ausführungsbeispiel gemäß Figur 1. Wie aus Figur 6 leicht ersichtlich, wurde die Getriebestruktur und die kinematischen Kopplungen der vier Planetenradsätze RS1, RS2, RS3, RS4 und der fünf Schaltelemente A, B, C, D, E untereinander und zur Antriebs- und Abtriebswelle AN, AB fast vollständig von Figur 1 übernommen. Der wesentliche Unterschied zu Figur 1 besteht wiederum in der kinematischen Kopplung des fünften Schaltelementes E an die Radsatzelemente. Gemäß Figur 6 ist vorgesehen, dass die Kupplung E nunmehr im Kraftfluss zwischen der fünften Welle 5 und der achten Welle 8 des Getriebes angeordnet ist. Im Unterschied zu Figur 1 sind nunmehr also Steg ST2 und Hohlrad HO2 des zweiten Planetenradsatzes RS2 über die Kupplung E miteinander verbindbar.

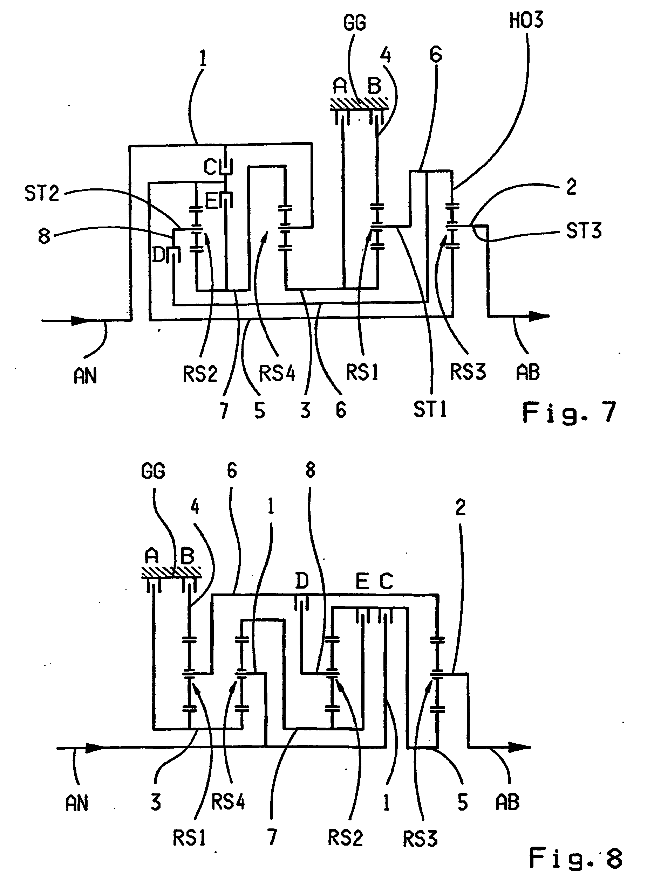

Figur 7 zeigt eine schematische Darstellung eines vierten Ausführungsbeispiels eines erfindungsgemäßen Mehrstufengetriebes, wiederum basierend auf dem zuvor im Detail beschriebenen ersten Ausführungsbeispiel gemäß Figur 1. Wie aus Figur 7 leicht ersichtlich, wurde die Getriebestruktur und die kinematischen Kopplungen der vier Planetenradsätze RS1, RS2, RS3, RS4 und der fünf Schaltelemente A, B, C, D, E untereinander und zur Antriebs- und Abtriebswelle AN, AB fast vollständig von Figur 1 übernommen. Der wesentliche Unterschied zu Figur 1 besteht diesmal in der kinematischen Kopplung des vierten Schaltelementes D. Gemäß Figur 7 ist vorgesehen, dass die Kupplung D nunmehr im Kraftfluss zwischen der achten Welle 8 und der sechsten Welle 6 des Getriebes angeordnet ist. Im Unterschied zu Figur 1 ist nunmehr also die zwischen dem Steg ST1 des ersten Planetenradsatzes RS1 und dem Hohlrad HO3 des dritten Planetenradsatzes RS3 vorgesehene Koppelwelle 6 über die Kupplung D mit dem Steg ST2 des zweiten Planetenradsatzes RS2 verbindbar.

Infolge dieser Anbindung des Kupplung D verläuft - im Unterschied zu Figur 1 - nunmehr die sechste Welle 6 abschnittsweise zentrisch innerhalb der dritten Welle 3 und abschnittsweise zentrisch innerhalb der siebten Welle 7, wobei die fünfte Welle 5 abschnittsweise zentrisch innerhalb dieser sechsten Welle 6 verläuft. Wie in Figur 1 umgreift ein anderer Abschnitt der fünften Welle 5 die Kupplung D und den zweiten Planetenradsatz RS2 in axialer und radialer Richtung vollständig. Ebenfalls wie in Figur 1 übergreift die erste Welle 1 den zweiten und vierten Planetenradsatz RS2, RS4 sowie die Kupplungen D, C, E in axialer und radialer Richtung vollständig.

Wie bereits erwähnt, ist die räumliche Anordnung der Schaltelemente der in den dargestellten Ausführungsbeispielen eines erfindungsgemäßen Mehrstufengetriebes innerhalb des Getriebes im Prinzip beliebig und wird nur durch die Abmessungen und die äußere Formgebung des Getriebegehäuses GG begrenzt. Entsprechend ist in Figur 8 eine beispielhafte Bauteilanordnungs-Variante des Mehrstufengetriebes gemäß Figur 7 dargestellt, wobei alle kinematischen Kopplungen der Radsatzelemente, Schaltelemente und Wellen untereinander unverändert aus Figur 7 übernommen sind. Ähnlich wie die in den Figuren 3 und 4 zuvor beschriebene Bauteilanordnungs-Varianten eignet sich die in Figur 8 dargestellte Bauteilanordnungs-Variante aufgrund der schlanken Gehäusestruktur besonders gut für den Einbau in ein Fahrzeug mit so genanntem "Standard-Antrieb".

Wie aus Figur 8 ersichtlich, sind die vier Planetenradsätze RS1 bis RS4 nunmehr in axialer Richtung in der Reihenfolge RS1, RS4, RS2, RS3 koaxial hintereinander angeordnet, vergleichbar zu den Figuren 3 und 4. Antriebswelle AN und Abtriebswelle AB sind unverändert koaxial zueinander angeordnet, sodass der dritte Planetenradsatz RS3 unverändert der abtriebsnahe Radsatz des Getriebes ist, der erste Planetenradsatz RS1 aber nunmehr der antriebsnahe Radsatz des Getriebes ist. Selbstverständlich sind die im Rahmen der Beschreibung der vorigen Ausführungsbeispiele getroffenen Aussagen hinsichtlich der Möglichkeiten, die relative räumliche Lage von Antriebs- und Abtriebswelle AN, AB bzw. von An- und Abtrieb des Getriebes auch auf das Ausführungsbeispiel gemäß Figur 8 sinngemäß übertragbar.

Entsprechend der gegenüber Figur 7 geänderten räumlichen Lage der vier Planetenradsätze RS1 bis RS4 relativ zueinander ergibt sich gemäß Figur 8 auch eine gegenüber Figur 7 geänderte zweckmäßige räumliche Anordnung der fünf Schaltelemente A bis E innerhalb des Getriebegehäuses GG relativ zu den Radsätzen. Der antriebsnahe Teil des Getriebes, bestehend aus den beiden Bremsen A und B und den beiden Planetenradsätzen RS1 und RS4 ist identisch zu Figur 3, insofern kann auf die nochmalige Beschreibung der vorgeschlagenen räumlichen Anordnung und Anordnungsvarianten dieser Bauteile an dieser Stelle verzichtet werden. Wie in Figur 8 ersichtlich, ist die Kupplung D räumlich gesehen nunmehr in einem Bereich axial zwischen den Planetenradsätzen RS4 und RS2 angeordnet, dabei axial unmittelbar angrenzend an den zweiten Planetenradsatz RS2. Axial zwischen den beiden Planetenradsätzen RS2 und RS3 sind nunmehr die beiden Kupplungen E und C angeordnet, hierbei beispielhaft im Wesentlichen axial nebeneinander, wobei die Kupplung E axial unmittelbar an den zweiten Planetenradsatz RS2 angrenzt, die Kupplung C also näher am Planetenradsatz RS3 angeordnet ist als die Kupplung E. Selbstverständlich kann in einer anderen Ausgestaltung des Getriebes auch vorgesehen sein, dass die beiden axial zwischen den Planetenradsätzen RS2 und RS3 angeordneten Kupplungen E und C radial betrachtet im Wesentlichen übereinander angeordnet sind.

Im Unterschied zu Figur 3 übergreift die sechste Welle 6 des Getriebes gemäß Figur 8 in ihrem axialen Verlauf den vierten Planetenradsatz RS4, die Kupplung D, den zweiten Planetenradsatz RS2, die Kupplung E und nunmehr auch die Kupplung C in axialer Richtung vollständig.

Eine in Figur 8 zur Vereinfachung nicht näher dargestellte Servoeinrichtung der Kupplung D kann beispielsweise zumindest überwiegend axial zwischen den beiden Planetenradsätzen RS1 und RS4 angeordnet und an dem Steg ST1 des ersten Planetenradsatzes RS1 axial verschiebbar gelagert sein, wobei in diesem Fall ein auf das Lamellenpaket der Kupplung D wirkendes Betätigungselement dieser Servoeinrichtung den vierten Planetenradsatz RS4 in axialer Richtung übergreift und das ihm zugeordnete Lamellenpaket beim Schließen der Kupplung D axial in Richtung des zweiten Planetenradsatzes RS2. Zur Realisierung einer konstruktiv besonders einfachen Druck- und Schmiermittelzuführung zur Servoeinrichtung der Kupplung D kann beispielsweise aber auch vorgesehen sein, dass diese Servoeinrichtung der Kupplung D zumindest überwiegend unmittelbar neben dem dritten Planetenradsatz RS3 auf dessen dem Planetenradsatz RS2 zugewandten Seite angeordnet und an dem Sonnenrad SO3 des dritten Planetenradsatzes RS3 bzw. an der fünften Welle 5 axial verschiebbar gelagert ist. In diesem Fall übergreift ein auf das Lamellenpaket der Kupplung D wirkendes Betätigungselement dieser Servoeinrichtung die beiden Kupplungen C und E sowie den zweiten Planetenradsatz RS2 in axialer Richtung und betätigt das ihm zugeordnete Lamellenpaket beim Schließen der Kupplung D axial in Richtung des vierten Planetenradsatzes RS4.

Eine in Figur 8 zur Vereinfachung ebenfalls nicht näher dargestellte Servoeinrichtung der Kupplung C kann beispielsweise konstruktiv vergleichsweise einfach an der Antriebswelle AN bzw. der Welle 1 axial verschiebbar gelagert sein und dabei wahlweise in einem Bereich axial zwischen den beiden benachbarten Lamellenpaketen der Kupplungen C und E oder auf der der Kupplung E abgewandten Seite des Lamellenpaketes der Kupplung C angeordnet sein. Eine in Figur 8 zur Vereinfachung ebenfalls nicht näher dargestellte Servoeinrichtung der Kupplung E kann beispielsweise an der Welle 7 axial verschiebbar gelagert und dabei in einem Bereich axial zwischen den beiden benachbarten Lamellenpaketen der Kupplungen C, E oder axial zwischen dem Lamellenpaket der Kupplung E und dem zweiten Planetenradsatz RS2 angeordnet sein.

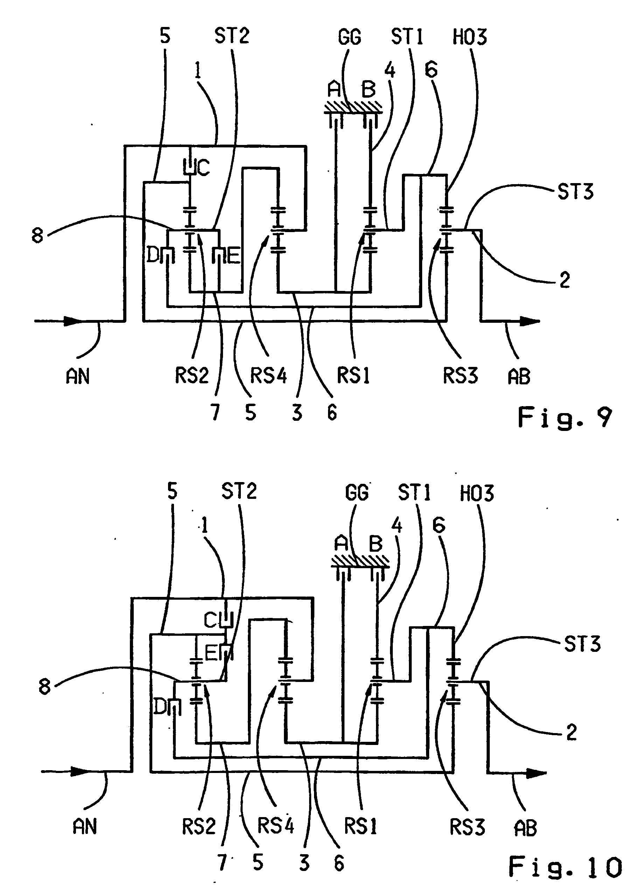

Figur 9 zeigt nun eine schematische Darstellung eines fünften Ausführungsbeispiels eines erfindungsgemäßen Mehrstufengetriebes, basierend auf dem zuvor im Detail beschriebenen vierten Ausführungsbeispiel gemäß Figur 7. Wie aus Figur 9 leicht ersichtlich, wurde die Getriebestruktur und die kinematischen Kopplungen der vier Planetenradsätze RS1, RS2, RS3, RS4 und der fünf Schaltelemente A, B, C, D, E untereinander und zur Antriebs- und Abtriebswelle AN, AB fast vollständig von Figur 7 übernommen. Der wesentliche Unterschied zu Figur 7 besteht lediglich in der kinematischen Kopplung des fünften Schaltelementes E an die Radsatzelemente. Gemäß Figur 9 ist vorgesehen, dass die Kupplung E nunmehr im Kraftfluss zwischen der siebten Welle 7 und der achten Welle 8 des Getriebes angeordnet ist. Im Unterschied zu Figur 7 ist nunmehr also die zwischen dem Sonnenrad SO2 des zweiten Planetenradsatzes RS2 und dem Hohlrad HO4 des vierten Planetenradsatzes RS4 vorgesehene Koppelwelle 7 über die Kupplung E mit dem Steg ST2 des zweiten Planetenradsatzes RS2 verbindbar. Die kinematische Kopplung der Kupplung E an die Radsatzelemente ist in den Figuren 5 und 9 also identisch.

Figur 10 schließlich zeigt eine schematische Darstellung eines sechsten Ausführungsbeispiels eines erfindungsgemäßen Mehrstufengetriebes, wiederum basierend auf dem zuvor beschriebenen vierten Ausführungsbeispiel gemäß Figur 7. Wie aus Figur 10 leicht ersichtlich, wurde die Getriebestruktur und die kinematischen Kopplungen der vier Planetenradsätze RS1, RS2, RS3, RS4 und der fünf Schaltelemente A, B, C, D, E untereinander und zur Antriebs- und Abtriebswelle AN, AB fast vollständig von Figur 7 übernommen. Der wesentliche Unterschied zu Figur 7 besteht lediglich in der kinematischen Kopplung des fünften Schaltelementes E an die Radsatzelemente. Gemäß Figur 10 ist vorgesehen, dass die Kupplung E nunmehr im Kraftfluss zwischen der fünften Welle 5 und der achten Welle 8 des Getriebes angeordnet ist. Im Unterschied zu Figur 7 sind nunmehr also Steg ST2 und Hohlrad HO2 des zweiten Planetenradsatzes RS2 über die Kupplung E miteinander verbindbar. Die kinematische Kopplung der Kupplung E an die Radsatzelemente ist also in den Figuren 6 und 10 identisch.

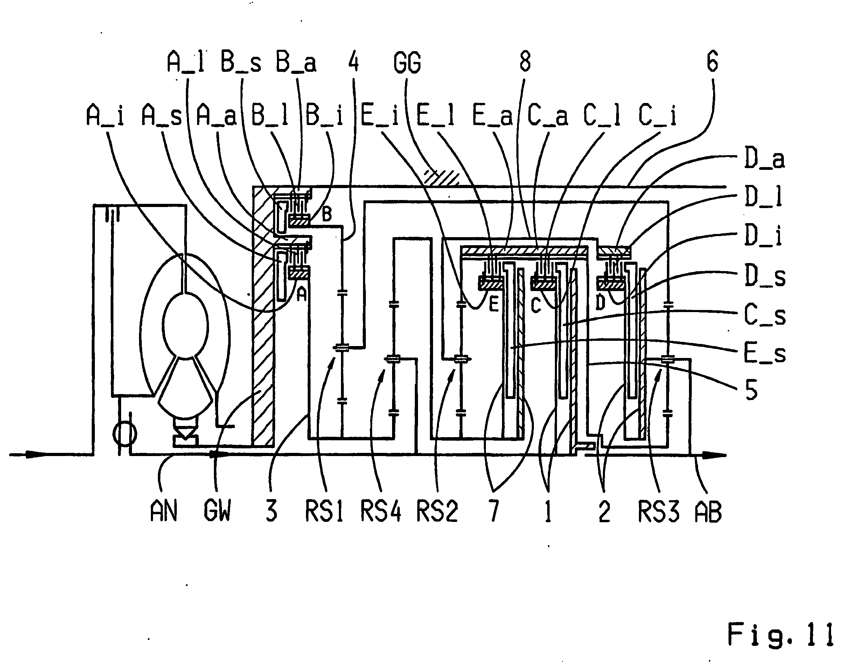

Im folgenden werden nun anhand der Figuren 11, 12 und 13 drei beispielhafte Ausgestaltungsvarianten für das Mehrstufengetriebe gemäß Figur 4 näher beschrieben, wobei in diesen drei Figuren auch sinnvolle Anordnungen von Servoeinrichtungen zum Betätigen der jeweiligen Lamellenpakete der fünf Schaltelemente in schematisch vereinfachter Darstellung eingezeichnet sind. Alle Servoeinrichtungen können in bekannter Weise einen auf das Lamellenpaket bzw. Reibelement des jeweiligen Schaltelementes wirkenden Kolben, einen dem Kolben zugeordneten mit Druckmittel befüllbaren Druckraum, sowie ein beispielsweise als Tellerfeder oder Spiralfederpaket oder Hydraulikkammer ausgebildetes Kolbenrückstellelement aufweisen. Die Servoeinrichtungen der Kupplungen können in bekannter Weise zum Ausgleich des rotatorischen Drucks ihres rotierenden Druckraums zusätzlich auch einen dynamischen Druckausgleich aufweisen mit einem auf den Kolben wirkenden, drucklos mit Schmiermittel befüllbaren Druckausgleichsraum. In allen drei Ausführungsbeispielen ist die Antriebswelle AN mit einem an sich bekannten Drehmomentwandler verbunden, der hier beispielhaft das Anfahrelement des Getriebes bildet und entsprechend mit einem nicht näher dargestellten Antriebsmotor des Kraftfahrzeugs verbunden ist.

Die wesentlichen Änderungen der in Figur 11 dargestellten ersten Ausgestaltungsvariante des Mehrstufengetriebe gemäß Figur 4 gegenüber Figur 4 betreffen die räumliche Anordnung der benachbarten Schaltelemente A, B angrenzend an den ersten Planetenradsatz RS1 sowie die räumliche Anordnung des Schaltelementes C im Bereich axial zwischen dem zweiten und dritten Planetenradsatz RS2, RS3.

Wie in Figur 11 ersichtlich, sind die beiden Bremsen A und B wie in Figur 4 auf der dem vierten Planetenradsatz RS4 abgewandten Seite des ersten Planetenradsatzes RS1 angeordnet, im Unterschied zu Figur 4 nunmehr aber in axialer Richtung gesehen zumindest weitgehend radial übereinander. Dabei ist das mit B_l bezeichnete Lamellenpaket der Bremse B zumindest weitgehend radial über dem mit A_l bezeichneten Lamellenpaket der Bremse A angeordnet und die dem Lamellenpaket B_l zugeordnete und mit B_s bezeichnete Servoeinrichtung der Bremse B zumindest weitgehend radial über der dem Lamellenpaket A_l zugeordneten und mit A_s bezeichneten Servoeinrichtung der Bremse A. Beide Servoeinrichtungen A_s, B_s sind auf der dem ersten Planetenradsatz RS1 gegenüberliegenden Seite des ihnen jeweils zugeordneten Lamellenpaketes A_l, B_l angeordnet und betätigen das ihnen jeweils zugeordnete Lamellenpaket A_l, B_l beim Schließen axial in Richtung Planetenradsatz RS1. Somit grenzen die Lamellenpakete A_l, B_l beider Bremsen A, B in axialer Richtung gesehen an den ersten Planetenradsatz RS1 an. Ein mit A_i bezeichneter Innenlamellenträger der Bremse A zur Aufnahme von vorzugsweise als Belaglamellen ausgeführten innenverzahnten Lamellen des Lamellenpaketes A_l bildet einen Abschnitt der dritten Welle 3 des Getriebes und ist entsprechend dem Radsatzschema ständig mit den Sonnenrädern des ersten und vierten Planetenradsatzes RS1, RS4 verbunden. Ein mit B_i bezeichneter Innenlamellenträger der Bremse B zur Aufnahme von vorzugsweise als Belaglamellen ausgeführten innenverzahnten Lamellen des Lamellenpaketes B_l bildet einen Abschnitt der vierten Welle 4 des Getriebes und ist entsprechend dem Radsatzschema ständig mit dem Hohlrad des ersten Planetenradsatzes RS1 verbunden. Ein mit A_a bezeichneter Außenlamellenträger der Bremse A zur Aufnahme von vorzugsweise als Stahllamellen ausgeführten außenverzahnten Lamellen des Lamellenpaketes A_l und ein mit B_a bezeichneter Außenlamellenträger der Bremse B zur Aufnahme von vorzugsweise als Stahllamellen ausgeführten außenverzahnten Lamellen des Lamellenpaketes B_l sind beide beispielhaft in eine verdrehfest mit dem Getriebegehäuse GG verbundene Gehäusewand GW integriert. Auch die beiden Servoeinrichtungen A_s, B_s sind in diese Gehäusewand GW integriert bzw. an dieser Gehäusewand GW axial verschiebbar gelagert, wodurch die Druckmittelzufuhr zu diesen beiden Servoeinrichtungen A_s, B_s konstruktiv entsprechend einfach ausgeführt sein kann. Selbstverständlich können Außenlamellenträger A_a und/oder B_a in einer anderen Ausgestaltung auch als separate Bauteile ausgeführt sein, die dann über geeignete Mittel verdrehfest mit dem Getriebegehäuse GG verbunden sind.

Wie in Figur 11 weiterhin ersichtlich, sind die drei Kupplungen C, D und E wie in Figur 4 alle in einem Bereich axial zwischen dem zweiten und dritten Planetenradsatz RS2, RS3 angeordnet. Die Kupplung C ist im Unterschied zu Figur 4 nunmehr axial zwischen den beiden Kupplungen E und D angeordnet, wobei die Kupplung E axial unmittelbar an der zweiten Planetenradsatz RS2 angrenzt und die Kupplung D axial unmittelbar an den dritten Planetenradsatz RS3. Beispielhaft sind hierbei die mit C_l, D_l und E_l bezeichneten Lamellenpakete der Kupplungen C, D und E alle auf gleichem Durchmesser angeordnet zur Realisierung eines Gleichteilkonzepts. Ein mit C_i bezeichneter Innenlamellenträger der Kupplung C zur Aufnahme von vorzugsweise als Stahllamellen ausgeführten innenverzahnten Lamellen des Lamellenpaketes C_l bildet einen Abschnitt der ersten Welle 1 des Getriebes und ist entsprechend dem Radsatzschema ständig mit der Antriebswelle AN des Getriebes verbunden. Ein mit D_i bezeichneter Innenlamellenträger der Kupplung D zur Aufnahme von vorzugsweise als Belaglamellen ausgeführten innenverzahnten Lamellen des Lamellenpaketes D_l bildet einen Abschnitt der zweiten Welle 2 des Getriebes und ist entsprechend dem Radsatzschema ständig mit dem Steg des dritten Planetenradsatzes RS3 und der Abtriebswelle AB des Getriebes verbunden. Ein mit E_i bezeichneter Innenlamellenträger der Kupplung E zur Aufnahme von vorzugsweise als Stahllamellen ausgeführten innenverzahnten Lamellen des Lamellenpaketes E_l bildet einen Abschnitt der siebten Welle 7 des Getriebes und ist entsprechend dem Radsatzschema ständig mit dem Sonnenrad des zweiten Planetenradsatzes RS2 und dem Hohlrad des vierten Planetenradsatzes RS4 verbunden. Ein mit C_a bezeichneter Außenlamellenträger der Kupplung C zur Aufnahme von vorzugsweise als Belaglamellen ausgeführten außenverzahnten Lamellen des Lamellenpaketes C_l und ein mit E_a bezeichneter Außenlamellenträger der Kupplung E zur Aufnahme von vorzugsweise als Belaglamellen ausgeführten außenverzahnten Lamellen des Lamellenpaketes E_l sind beispielhaft einteilig als gemeinsames Bauelement ausgeführt, bilden einen Abschnitt der fünften Welle 5 des Getriebes und sind entsprechend dem Radsatzschema ständig mit dem Hohlrad des zweiten Planetenradsatzes RS2 und dem Sonnenrad des dritten Planetenradsatzes RS3 verbunden. Ein mit D_a bezeichneter Außenlamellenträger der Kupplung D zur Aufnahme von vorzugsweise als Stahllamellen ausgeführten außenverzahnten Lamellen des Lamellenpaketes D_l bildet einen Abschnitt der achten Welle 8 des Getriebes und ist entsprechend dem Radsatzschema ständig mit dem Steg des zweiten Planetenradsatzes RS2 verbunden.

Die dem Lamellenpaket C_l zugeordnete und mit C_s bezeichnete Servoeinrichtung der Kupplung C ist auf der dem zweiten Planetenradsatz RS2 gegenüberliegenden Seite des Lamellenpaketes C_l angeordnet, an dem Innenlamellenträger C_i axial verschiebbar gelagert, rotiert stets mit Drehzahl der Welle 1 bzw. der Antriebswelle AN und betätigt das Lamellenpaket C_l beim Schließen axial in Richtung Planetenradsatz RS2. Druckmittel und Schmiermittel können der Servoeinrichtung C_s in konstruktiv vergleichsweise einfacher Weise über entsprechende Kanäle von der Antriebswelle AN her zugeleitet werden. Die dem Lamellenpaket D_l zugeordnete und mit D_s bezeichnete Servoeinrichtung der Kupplung D ist auf der dem zweiten Planetenradsatz RS2 gegenüberliegenden Seite des Lamellenpaketes D_l angeordnet, an dem Innenlamellenträger D_i axial verschiebbar gelagert, rotiert stets mit Drehzahl der Welle 2 bzw. der Abtriebswelle AB und betätigt das Lamellenpaket D_l beim Schließen ebenfalls axial in Richtung Planetenradsatz RS2. Druckmittel und Schmiermittel können der Servoeinrichtung D_s über entsprechende Kanäle von der Abtriebswelle AB her über einen auf der Abtriebswelle AB verdrehbar gelagerten und als Sonnenwelle des Planetenradsatzes RS3 ausgebildeten Abschnitt der Welle 5 und über einen auf der genannten Sonnenwelle verdrehbar gelagerten Nabenabschnitt des Innenlamellenträgers D_i zugeleitet werden. Die dem Lamellenpaket E_l zugeordnete und mit E_s bezeichnete Servoeinrichtung der Kupplung E ist auf der dem zweiten Planetenradsatz RS2 gegenüberliegenden Seite des Lamellenpaketes E_l angeordnet, an dem Innenlamellenträger E_i axial verschiebbar gelagert, rotiert stets mit Drehzahl der Welle 7 und betätigt das Lamellenpaket E_l beim Schließen ebenfalls axial in Richtung Planetenradsatz RS2. Druckmittel und Schmiermittel können der Servoeinrichtung E_s über entsprechende Kanäle von der Antriebswelle AN her über einen auf der Antriebswelle AN verdrehbar gelagerten Nabenabschnitt des Innenlamellenträgers E_i zugeleitet werden. Wie in Figur 11 ersichtlich, können auch die Servoeinrichtungen C_s, D_s und E_s zur Realisierung eines Gleichteilkonzepts zumindest zum Teil konstruktiv gleich ausgeführt sein.

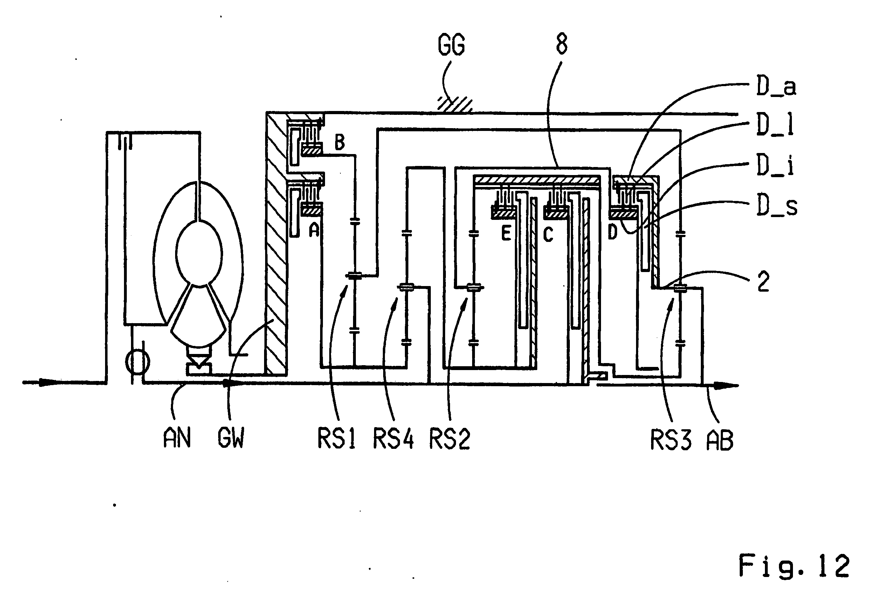

Die in Figur 12 schematisch dargestellte zweite Ausgestaltungsvariante des Mehrstufengetriebe gemäß Figur 4 basiert auf der zuvor anhand Figur 11 beschriebenen ersten Ausgestaltungsvariante. Die Änderungen gegenüber Figur 11 betreffen lediglich die konstruktive Ausgestaltung der Kupplung D. Wie aus Figur 12 leicht ersichtlich, sind die übrigen Getriebeelemente unverändert aus Figur 11 übernommen, weshalb auf deren nochmalige Beschreibung an dieser Stelle verzichtet werden kann. Im Unterschied zu Figur 11 bildet der Innenlamellenträger D_i der Kupplung D nunmehr einen Abschnitt der achten Welle 8 des Getriebes und ist entsprechend dem Radsatzschema ständig mit dem Steg des zweiten Planetenradsatzes RS2 verbunden. Im Unterschied zu Figur 11 bildet der Außenlamellenträger D_a der Kupplung D nunmehr einen Abschnitt der zweiten Welle 2 des Getriebes und ist entsprechend dem Radsatzschema ständig mit dem Steg des dritten Planetenradsatzes RS3 und der Abtriebswelle AB des Getriebes verbunden. Dabei bildet der Außenlamellenträger D_a einen Zylinderraum, innerhalb dessen sowohl das Lamellenpaket D_l der Kupplung D als auch die Servoeinrichtung D_s zum Betätigen dieses Lamellenpaketes D_l angeordnet sind. Die Servoeinrichtung D_s der Kupplung D ist also nunmehr axial an dem Außenlamellenträger D_a axial verschiebbar gelagert, rotiert aber wie in Figur 11 stets mit Drehzahl der Welle 2 bzw. der Abtriebswelle AB und betätigt das Lamellenpaket D_l beim Schließen wie in Figur 11 auch axial in Richtung Planetenradsatz RS2. Wie in Figur 12 ersichtlich, ist hierdurch eine vergleichsweise einfache Konstruktion von Außenlamellenträger D_a der Kupplung D und Steg bzw. Planetenträger des dritten Planetenradsatzes RS3 realisierbar, beispielsweise indem der Außenlamellenträger D_a und das der Kupplung D zugewandte Stegblech des Stegs bzw. Planetenträgers des dritten Planetenradsatzes RS3 einstückig ausgeführt sind. Druckmittel und Schmiermittel können der Servoeinrichtung D_s beispielsweise über entsprechende Kanäle von der Abtriebswelle AB her über den Steg des dritten Planetenradsatzes RS3 zugeleitet werden, oder beispielsweise über entsprechende Kanäle von der Abtriebswelle AB her über eine auf der Antriebswelle AB verdrehbar gelagerten Sonnenwelle des Planetenradsatzes RS3 und eine in Figur 12 nicht näher dargestellte, auf der genannten Sonnenwelle verdrehbar gelagerten Nabe des Außenlamellenträgers D_a zugeleitet werden.

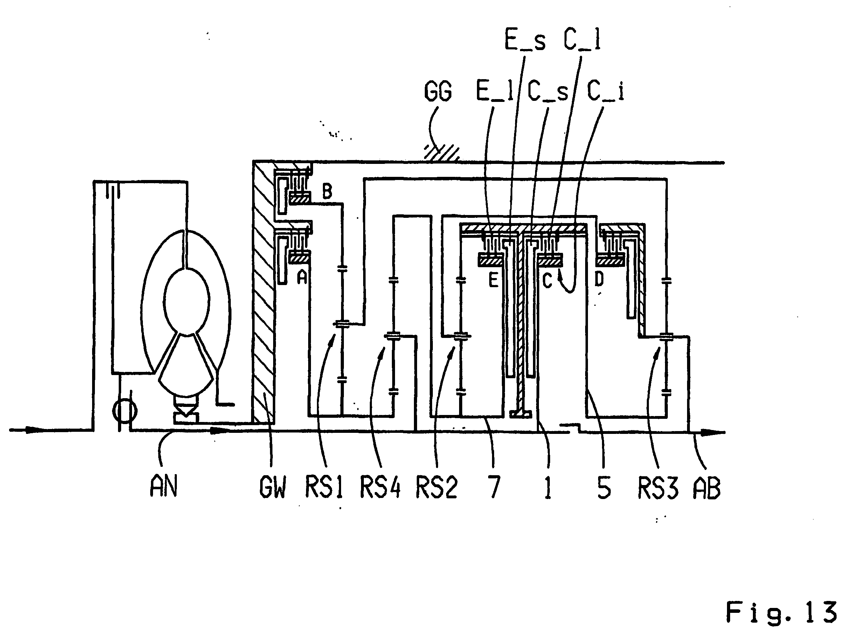

Die in Figur 13 schematisch dargestellte dritte Ausgestaltungsvariante des Mehrstufengetriebe gemäß Figur 4 basiert auf der zuvor anhand Figur 12 beschriebenen zweiten Ausgestaltungsvariante. Die Änderungen gegenüber Figur 12 betrifft die konstruktive Ausgestaltung der Baugruppe mit den beiden Kupplungen C und E. Wie aus Figur 13 leicht ersichtlich, sind die übrigen Getriebeelemente unverändert aus Figur 12 übernommen.

Vergleichbar zu Figur 12, ist für die Kupplungen C, E ein gemeinsamer Außenlamellenträger (C_a, E_a) vorgesehen, der einen Abschnitt der Welle 5 des Getriebes bildet und entsprechend dem Radsatzschema ständig mit dem Hohlrad des zweiten Planetenradsatzes RS2 und dem Sonnenrad des dritten Planetenradsatzes RS3 verbunden ist. Ähnlich wie in Figur 12 bildet der Innenlamellenträger C_i der Kupplung C einen Abschnitt der Welle 1 des Getriebes und ist ständig mit der Antriebswelle AN verbunden. Ähnlich wie in Figur 12 bildet der Innenlamellenträger E_i der Kupplung E einen Abschnitt der Welle 7 des Getriebes und ist ständig mit dem Sonnenrad des zweiten Planetenradsatzes RS2 und dem Hohlrad des vierten Planetenradsatzes RS4 verbunden.

Ausgehend von der Überlegung, eine fertigungstechnisch einfach vormontierbare Baugruppe mit zwei Lamellenpaketen und einem gemeinsamen Lamellentäger und zwei diesen Lamellenpaketen zugeordneten Servoeinrichtungen zu schaffen, weist der gemeinsame Außenlamellenträger C_a, E_a der Kupplungen C und E nunmehr im Bereich axial zwischen den beiden Lamellenpaketen C_l, E_l der Kupplungen C, E eine radial nach innen gerichtete Zwischenwand auf. Die Servoeinrichtung C_s der Kupplung C ist nunmehr axial zwischen der genannten Zwischenwand und dem Lamellenpaket C_l angeordnet, also axial unmittelbar angrenzend an die genannte Zwischenwand auf deren dem dritten Planetenradsatz RS3 zugewandten Seite. Die Servoeinrichtung E_s der Kupplung E ist axial zwischen der genannten Zwischenwand und dem Lamellenpaket E_l angeordnet, also axial unmittelbar angrenzend an die genannte Zwischenwand auf deren dem zweiten Planetenradsatz RS2 zugewandten Seite. Somit bildet der dem Außenlamellenträger C_a zugeordnete Abschnitt des gemeinsamen Außenlamellenträgers der Kupplungen C, E auf der dem dritten Planetenradsatz RS3 zugewandten Seite der genannten Zwischenwand einen Zylinderraum, innerhalb dessen Servoeinrichtung C_s und Lamellenpaket C_l der Kupplung C angeordnet sind. Weiterhin bildet der dem Außenlamellenträger E_a zugeordnete Abschnitt des gemeinsamen Außenlamellenträgers der Kupplungen C, E auf der dem zweiten Planetenradsatz RS2 zugewandten Seite der genannten Zwischenwand einen Zylinderraum, innerhalb dessen Servoeinrichtung E_s und Lamellenpaket E_l der Kupplung E angeordnet sind. Im Unterschied zu Figur 12 sind nunmehr beide Servoeinrichtungen C_s, E_s an dem gemeinsame Außenlamellenträger der Kupplungen C und E axial verschiebbar gelagert, nur durch die genannte Zwischenwand des gemeinsamen Außenlamellenträgers voneinander getrennt und rotieren stets mit Drehzahl der Welle 5 des Getriebes. Im Unterschied zu Figur 12 sind die Betätigungsrichtungen der beiden Servoeinrichtungen C_s, E_s beim Schließen der jeweiligen Kupplung C bzw. E entgegengesetzt zueinander. Druckmittel und Schmiermittel können den Servoeinrichtungen C_s, E_s in konstruktiv vergleichsweise einfacher Weise über entsprechende Kanäle von der Antriebswelle AN her über eine auf der Antriebswelle AN verdrehbar gelagerte Nabe des gemeinsamen Außenlamellenträgers zugeleitet werden.

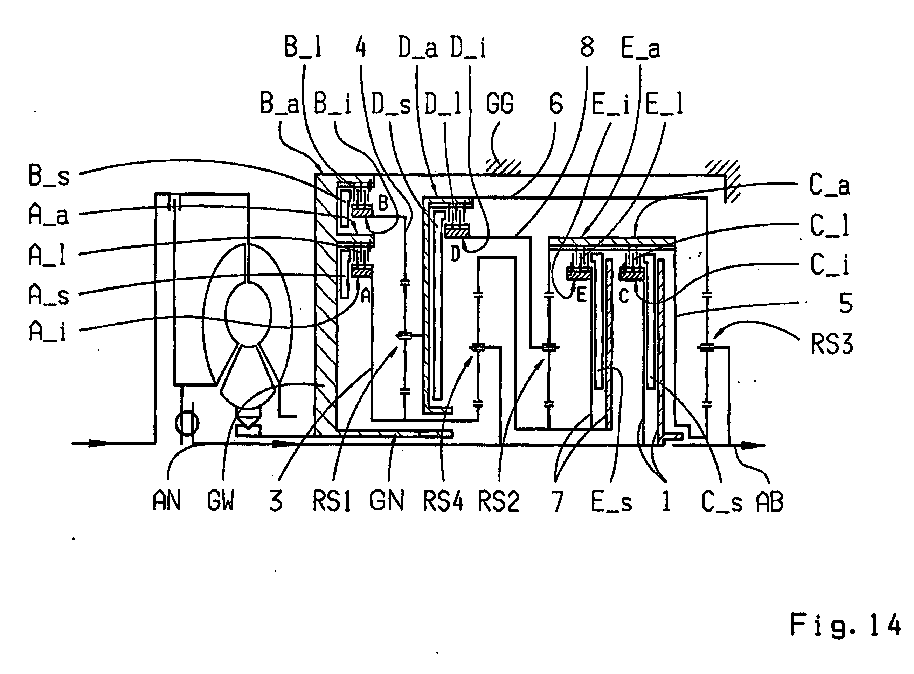

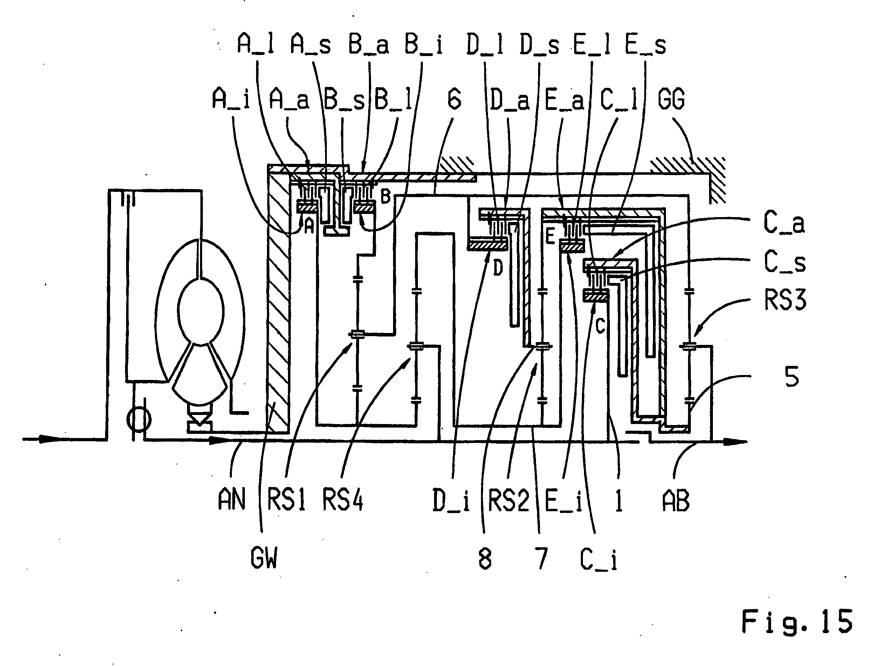

Im folgenden werden nun anhand der Figuren 14 und 15 zwei beispielhafte Ausgestaltungsvarianten für das Mehrstufengetriebe gemäß Figur 8 näher beschrieben, wobei in beiden Figuren ebenfalls sinnvolle Anordnungen von Servoeinrichtungen zum Betätigen der jeweiligen Lamellenpakete der fünf Schaltelemente in schematisch vereinfachter Darstellung eingezeichnet sind. Selbstverständlich sind die im Rahmen der Beschreibung der Figuren 11 bis 14 getroffenen Aussagen zur Ausführung der Servoeinrichtungen auch auf die Figuren 14 und 15 übertragbar.

Die wesentlichen Änderungen der in Figur 14 dargestellten ersten Ausgestaltungsvariante des Mehrstufengetriebe gemäß Figur 8 gegenüber Figur 8 betreffen die räumliche Anordnung der benachbarten Schaltelemente A, B angrenzend an den ersten Planetenradsatz RS1 sowie die räumliche Anordnung des Schaltelementes D neben dem vierten Planetenradsatz RS4.

Wie in Figur 14 ersichtlich, sind die beiden Bremsen A und B wie in Figur 8 auf der dem vierten Planetenradsatz RS4 abgewandten Seite des ersten Planetenradsatzes RS1 angeordnet, im Unterschied zu Figur 8 nunmehr aber in axialer Richtung gesehen zumindest weitgehend radial übereinander. Dabei wurde die Anordnung bzw. konstruktive Ausgestaltung dieser beiden Bremsen A, B aus Figur 11 übernommen. Wie in Figur 11 ist auch in Figur 14 das Lamellenpaket der radial inneren Bremse A mit A_l bezeichnet, der beispielhaft in die getriebegehäusefesten Gehäusewand GW integrierte Außenlamellenträger der Bremse A mit A_a, der mit den Sonnenrädern der Planetenradsätze RS1 und RS4 verbundene Innenlamellenträger der Bremse A mit A_i und die an der Gehäusewand GW (bzw. am Außenlamellenträger A_a) axial verschiebbar gelagerte Servoeinrichtung der Bremse A mit A_s. Wie in Figur 11 ist auch in Figur 14 das Lamellenpaket der radial äußeren Bremse B mit B_l bezeichnet, der beispielhaft in die getriebegehäusefesten Gehäusewand GW integrierte Außenlamellenträger der Bremse B mit B_a, der mit dem Hohlrad des Planetenradsatzes RS1 verbundene Innenlamellenträger der Bremse B mit B_i und die an der Gehäusewand GW (bzw. am Außenlamellenträger B_a) axial verschiebbar gelagerte Servoeinrichtung der Bremse B mit B_s. Beide Servoeinrichtungen A_s, B_s sind also im Bereich der dem nicht näher dargestellen Antriebsmotor zugewandten Außenwand (GW) des Getriebes angeordnet, beide Lamellenpakete A_l, B_l grenzen also in axialer Richtung gesehen unmittelbar an den ersten Planetenradsatz RS1 an.

Wie in Figur 14 weiterhin ersichtlich, entspricht die räumliche Anordnung der beiden Kupplungen C und E axial zwischen dem zweiten und dritten Planetenradsatz RS2, RS3 der Anordnung in Figur 8. Die Kupplung E grenzt axial unmittelbar an den zweiten Planetenradsatz RS2 an. Die Kupplung C ist axial benachbart zum dritten Planetenradsatz RS3 angeordnet. Zur Realisierung eines Gleichteilkonzepts sind die Lamellenpakete C_l, E_l der Kupplungen C, E beispielhaft auf gleichem Durchmesser angeordnet. Der Innenlamellenträger C_i der Kupplung C bildet einen Abschnitt der ersten Welle 1 des Getriebes und ist ständig mit der Antriebswelle AN des Getriebes verbunden. Der Innenlamellenträger E_i der Kupplung E bildet einen Abschnitt der siebten Welle 7 des Getriebes und ist ständig mit dem Sonnenrad des zweiten Planetenradsatzes RS2 und dem Hohlrad des vierten Planetenradsatzes RS4 verbunden. Der Außenlamellenträger C_a der Kupplung C und der Außenlamellenträger E_a der Kupplung E sind beispielhaft als gemeinsames Bauelement ausgeführt, bilden einen Abschnitt der fünften Welle 5 des Getriebes und sind ständig mit dem Hohlrad des zweiten Planetenradsatzes RS2 und dem Sonnenrad des dritten Planetenradsatzes RS3 verbunden. Die dem Lamellenpaket C_l zugeordnete Servoeinrichtung C_s der Kupplung C ist auf der dem zweiten Planetenradsatz RS2 gegenüberliegenden Seite des Lamellenpaketes C_l angeordnet, an dem Innenlamellenträger C_i axial verschiebbar gelagert, rotiert stets mit Drehzahl der Welle 1 bzw. der Antriebswelle AN und betätigt das Lamellenpaket C_l beim Schließen axial in Richtung Planetenradsatz RS2. Druckmittel und Schmiermittel können der Servoeinrichtung C_s in konstruktiv vegleichsweise einfacher Weise über entsprechende Kanäle von der Antriebswelle AN her zugeleitet werden. Die dem Lamellenpaket E_l zugeordnete Servoeinrichtung E_s der Kupplung E ist auf der dem zweiten Planetenradsatz RS2 gegenüberliegenden Seite des Lamellenpaketes E_l angeordnet, an dem Innenlamellenträger E_i axial verschiebbar gelagert, rotiert stets mit Drehzahl der Welle 7 und betätigt das Lamellenpaket E_l beim Schließen ebenfalls axial in Richtung Planetenradsatz RS2. Druckmittel und Schmiermittel können der Servoeinrichtung E_s über entsprechende Kanäle von der Antriebswelle AN her über einen auf der Antriebswelle AN verdrehbar gelagerten Nabenabschnitt des Innenlamellenträgers E_i zugeleitet werden. Zur Realisierung eines Gleichteilkonzepts können auch die beiden Servoeinrichtungen C_s, E_s zumindest zum Teil konstruktiv gleich ausgeführt sein.

Wie in Figur 14 weiterhin ersichtlich, ist die Kupplung D im Unterschied zu Figur 8 räumlich gesehen nunmehr zumindest überwiegend in einem Bereich axial zwischen dem ersten und vierten Planetenradsatz RS1, RS4 angeordnet. Dabei bildet der Außenlamellenträger D_a der Kupplung D einen Abschnitt der sechsten Welle 6 des Getriebes und ist entsprechend dem Getriebeschema ständig mit dem Steg des ersten Planetenradsatzes RS1 und dem Hohlrad des dritten Planetenradsatzes RS3 verbunden. Entsprechend bildet der Innenlamellenträger D_i der Kupplung D einen Abschnitt der achten Welle 8 des Getriebes und ist entsprechend dem Getriebeschema ständig mit dem Steg des zweiten Planetenradsatzes RS2 verbunden. Der Außenlamellenträger D_a ist als ein in Richtung RS3 hin geöffneter zylinderförmiger Topf ausgebildet, in dessen Zylinderraum neben dem Lamellenpaket D_l auch die auf dieses Lamellenpaket D_l wirkende Servoeinrichtung D_s der Kupplung D angeordnet ist, derart, dass die Servoeinrichtung D_s das Lamellenpaket D_l beim Schließen axial in Richtung Planetenradsatz RS2 bzw. RS3 betätigt. Die Servoeinrichtung D_s rotiert also stets mit Drehzahl der sechsten Welle 6 des Getriebes. Druckmittel und Schmiermittel können der Servoeinrichtung D_s beispielsweise über entsprechende Kanäle von der Antriebswelle AN her über eine auf der Antriebswelle AN verdrehbar gelagerte Sonnenwelle der Planetenradsätze RS1, RS4 und über eine auf dieser Sonnenwelle verdrehbar gelagerten Nabe des Außenlamellenträgers D_a zugeleitet werden.

In einer anderen Ausgestaltung kann beispielsweise aber auch vorgesehen sein, dass die Druckmittel- und Schmiermittelzuführung zur Servoeinrichtung D_s über entsprechende Kanäle einer getriebegehäusefesten Nabe GN und eine Sonnenwelle der beiden Planetenradsätze RS1, RS4 und eine Nabe des Außenlamellenträgers D_a verläuft, wobei sich die genannte getriebegehäusefeste Nabe GN ausgehend von der Gehäusewand GW axial bis in den Bereich des Sonnenrades des ersten Planetenradsatzes RS1 oder sogar bis in den Bereich des Sonnenrades des vierten Planetenradsatzes RS4 erstreckt und dabei die Antriebswelle AN radial umschließt, und wobei die genannte Sonnenwelle aus zumindest einem den beiden Sonnenräder des ersten und vierten Planetenradsatzes RS1, RS4 gebildet wird und radial auf der getriebegehäusefesten Nabe GN verdrehbar gelagert ist, und wobei die genannte Nabe des Außenlamellenträgers D_a auf der genannten Sonnenwelle verdrehbar gelagert ist. Ist wie in dem in Figur 14 dargestellten Beispiel ein mit der Antriebswelle AN verbundener Drehmomentwandler als Anfahrelement des Getriebes vorgesehen, so kann die getriebegehäusefeste Nabe GN auch als Leitradwelle dieses Drehmomentwandlers ausgebildet sein, die dann mit der Getriebegehäusewand (beispielsweise über Schrauben) verdrehfest verbunden ist.

Figur 15 zeigt nun eine beispielhafte zweite Ausgestaltungsvariante des Mehrstufengetriebe gemäß Figur 8. Die wesentlichen Änderungen gegenüber Figur 8 betreffen die konstruktive Ausgestaltungen der Kupplungen D, E und C. Wie in Figur 15 ersichtlich, sind die beiden Bremsen A und B ähnlich wie in Figur 8 axial nebeneinander angeordnet, wobei das Lamellenpaket B_l der Bremse B räumlich gesehen im einem Bereich radial über dem ersten Planetenradsatz RS1 angeordnet ist, und wobei das Lamellenpaket A_l der Bremse A auf der dem Antrieb des Getriebes zugewandten Seite der Bremse B im Bereich der Gehäusewand GW angeordnet ist. Beide Lamellenpaket A_l, B_l weisen vorzugsweise den gleichen Durchmesser auf (Gleichteilekonzept). Der Außenlamellenträger B_a der Bremse B zur Aufnahme der vorzugsweise als Stahllamellen ausgeführten außenverzahnten Lamellen des Lamellenpaketes B_l ist hier beispielhaft als separates Bauteil mit weitgehend zylinderringförmiger Kontur ausgeführt und axial in das Getriebegehäuse GG verdrehfest eingesetzt. Der Innenlamellenträger B_i der Bremse B nimmt an seinem Außendurchmesser die vorzugsweise als Belaglamellen ausgeführten innenverzahnten Lamellen des Lamellenpaketes B_l auf und ist ständig mit dem Hohlrad des ersten Planetenradsatzes RS1 verbunden. Der Außenlamellenträger A_a der Bremse A zur Aufnahme der vorzugsweise als Stahllamellen ausgeführten außenverzahnten Lamellen des Lamellenpaketes A_l ist hier beispielhaft als separates Bauteil mit weitgehend zylinderförmiger Kontur ausgeführt und axial in den Außenlamellenträger B_a der Bremse B verdrehfest eingesetzt, derart, dass der Zylinderboden des Außenlamellenträgers A_a axial zwischen den Lamellenpaketen A_l und B_l angeordnet ist. Dabei ist die auf das Lamellenpaket A_l wirkende Servoeinrichtung A_s der Bremse A innerhalb des Zylinderraums des Außenlamellenträgers A_a der Bremse A angeordnet, derart, dass die Servoeinrichtung A_s das Lamellenpaket A_l beim Schließen axial in Richtung des Getriebeantriebs bzw. axial in zum ersten Planetenradsatz RS1 entgegengesetzter Richtung betätigt. Weiterhin ist die auf das Lamellenpaket B_l wirkende Servoeinrichtung B_s der Bremse B an der dem Lamellenpaket B_l zugewandten Seite des Zylinderbodens des Außenlamellenträgers A_a der Bremse A angeordnet und an diesem Außenlamellenträger A_a axial verschiebbar gelagert, sodass die Servoeinrichtung B_s das Lamellenpaket B_l beim Schließen der Bremse B axial in zur Bremse A entgegengesetzter Richtung betätigt. Die Druckmittelzufuhr zu den beiden Servoeeinrichtungen A_s, B_s kann in konstruktiv einfacher Weise über entsprechende Kanäle des Getriebegehäuses GG und der beiden Außenlamellenträger B_a, A_a erfolgen.

Wie in Figur 15 weiterhin ersichtlich, ist die Kupplung D ähnlich wie in Figur 8 räumlich gesehen in einem Bereich axial zwischen dem vierten Planetenradsatz RS4 und dem zweiten Planetenradsatz RS2 angeordnet. Im Unterschied zu Figur 8 bildet der Außenlamellenträger D_a nunmehr einen Abschnitt der achten Welle 8 des Getriebes und ist gemäß dem Getriebeschema ständig mit dem Steg des zweiten Planetenradsatzes RS2 verbunden. Entsprechend bildet der Innenlamellenträger D_i der Kupplung D im Unterschied zu Figur 8 nunmehr einen Abschnitt der sechsten Welle 6 des Getriebes und ist gemäß dem Radsatzschema ständig mit dem Steg des ersten Planetenradsatzes RS1 und dem Hohlrad des dritten Planetenradsatzes RS3 verbunden. Dabei bildet der zylinderförmige Außenlamellenträger D_a einen Zylinderraum, innerhalb dessen sowohl das Lamellenpaket D_l der Kupplung D als auch die Servoeinrichtung D_s zum Betätigen dieses Lamellenpaketes D_l angeordnet sind. Der Zylinderboden des Außenlamellenträgers D_a ist dem zweiten Planetenradsatz RS2 zugewandt und kann gleichzeitig als Stegblech des Stegs des zweiten Planetenradsatzes RS2 ausgebildet sein. Die Servoeinrichtung D_s der Kupplung D ist axial an dem Außenlamellenträger D_a axial verschiebbar gelagert, rotiert stets mit Drehzahl der Welle 8 und betätigt das Lamellenpaket D_l beim Schließen axial in zum Planetenradsatz RS2 entgegengesetzter Richtung. Druckmittel und Schmiermittel können der Servoeinrichtung D_s über entsprechende Kanäle beispielsweise von der Antriebswelle AN her über einen auf der Antriebswelle AN verdrehbar gelagerten und als Sonnenwelle des Planetenradsatzes RS2 ausgebildeten Abschnitt der Welle 7 und über eine auf der genannten Sonnenwelle verdrehbar gelagerten Nabe des Außenlamellenträgers D_a zugeleitet werden.

Ähnlich wie in Figur 8 sind auch in Figur 15 die Kupplungen C und E räumlich gesehen axial zwischen dem zweiten Planetenradsatz RS2 und dem dritten Planetenradsatz RS3 angeordnet. Der Innenlamellenträger C_i der Kupplung C zur Aufnahme der vorzugsweise als Belaglamellen ausgebildeten innenverzahnten Lamellen des Lamellenpaketes C_l der Kupplung C bildet einen Abschnitt der ersten Welle 1 und ist gemäß dem Getriebeschema ständig mit der Antriebswelle AN des Getriebes verbunden. Wie in Figur 15 angedeutet, kann zwischen der Antriebswelle AN bzw. Welle 1 und der Abtriebswelle AB des Getriebes eine radiale Lagerung vorgesehen sein. Der Innenlamellenträger E_i der Kupplung E zur Aufnahme der vorzugsweise als Belaglamellen ausgebildeten innenverzahnten Lamellen des Lamellenpaketes E_l der Kupplung E bildet einen Abschnitt der siebten Welle 7 und ist gemäß dem Getriebeschema ständig mit dem Sonnenrad des zweiten Planetenradsatzes RS2 und dem Hohlrad des vierten Planetenradsatzes RS4 verbunden.

Im Unterschied zu Figur 8 sind die Kupplungen C, E gemäß Figur 15 ineinander verschachtelt, wobei das Lamellenpaket C_l der Kupplung C einen kleineren Durchmesser aufweist als das Lamellenpaket E_l der Kupplung E und die Kupplung C vollständig innerhalb eines Zylinderraums angeordnet ist, der durch den Außenlamellenträger E_a der Kupplung E gebildet wird. Hierzu sind sowohl der Außenlamellenträger E_a der Kupplung E als auch der Außenlamellenträger C_a der Kupplung C jeweils als ein in Richtung Planetenradsatz RS2 hin geöffneter Zylinder ausgebildet. Der zylindrische Abschnitt des Außenlamellenträgers E_a ist mit dem Hohlrad des zweiten Planetenradsatzes RS2 (vorzugsweise lösbar) verdrehfest verbunden und erstreckt sich ausgehend von diesem Hohlrad axial bis kurz von den dritten Planetenradsatz RS3 und geht hier in einen weitgehend scheibenförmigen Zylinderboden über, welcher sich dann radial nach innen erstreckt bis zum Sonnenrad des dritten Planetenradsatzes RS3 und hier mit diesem Sonnenrad verdrehfest verbunden ist. Vorzugsweise ist dieser Nabenbereich des Außenlamellenträgers E_a radial auf der Abtriebswelle AB gelagert. Am Innendurchmesser des zylindrischen Abschnitt des Außenlamellenträgers E_a, räumlich gesehen nahe dem zweiten Planetenradsatz RS2, ist das Lamellenpaket E_l der Kupplung E angeordnet, wobei die vorzugsweise als Stahllamellen ausgebildeten außenverzahnten Lamellen diesen Lamellenpaketes E_l in ein entsprechendes Mitnahmeprofil des Außenlamellenträgers E_a eingreifen. Die auf das Lamellenpaket E_l wirkende Servoeinrichtung E_s ist ebenfalls innerhalb der Zylinderraums des Außenlamellenträgers E_a auf der dem dritten Planetenradsatz RS3 zugewandten Seite dieses Lamellenpaketes E_l angeordnet und betätigt das Lamellenpaket E_l beim Schließen der Kupplung E axial in Richtung des zweiten Planetenradsatzes RS2. Dabei umschließt die Servoeinrichtung E_s der Kupplung E den zylinderförmigen Außenlamellenträger C_a der Kupplung C; anders formuliert ist der zylinderförmige Außenlamellenträger C_a der Kupplung C zumindest weitgehend innerhalb eines durch die Servoeinrichtung E_s der Kupplung E gebildeten Zylinderraums angeordnet. Innerhalb des Zylinderraums des Außenlamellenträgers C_a der Kupplung C wiederum sind das Lamellenpaket C_l der Kupplung C und die auf dieses Lamellenpaket C_l wirkende Servoeinrichtung C_s angeordnet, wobei das Lamellenpaket C_l benachbart zum Innenlamellenträger E_i der Kupplung E angeordnet ist und die Servoeinrichtung C_s auf der dem zweiten Planetenradsatz RS2 abgewandten Seite des Lamellenpaketes C_l, sodass die Servoeinrichtung C_s das Lamellenpaket C_l beim Schließen der Kupplung C axial in Richtung des zweiten Planetenradsatzes RS2 betätigt. In seinem Nabenbereich ist der zylinderförmige Außenlamellenträger C_a der Kupplung C mit der Nabe des Außenlamellenträgers E_a der Kupplung E und dem Sonnenrad des dritten Planetenradsatzes RS3 verdrehfest verbunden. Druckmittel und Schmiermittel können beiden Servoeinrichtungen C_s, E_s beispielsweise über entsprechende Kanäle von der Abtriebswelle AB her über die auf der Abtriebswelle AB verdrehbar gelagerten Nabe der Außenlamellenträgers C_a der Kupplung C zugeleitet werden.

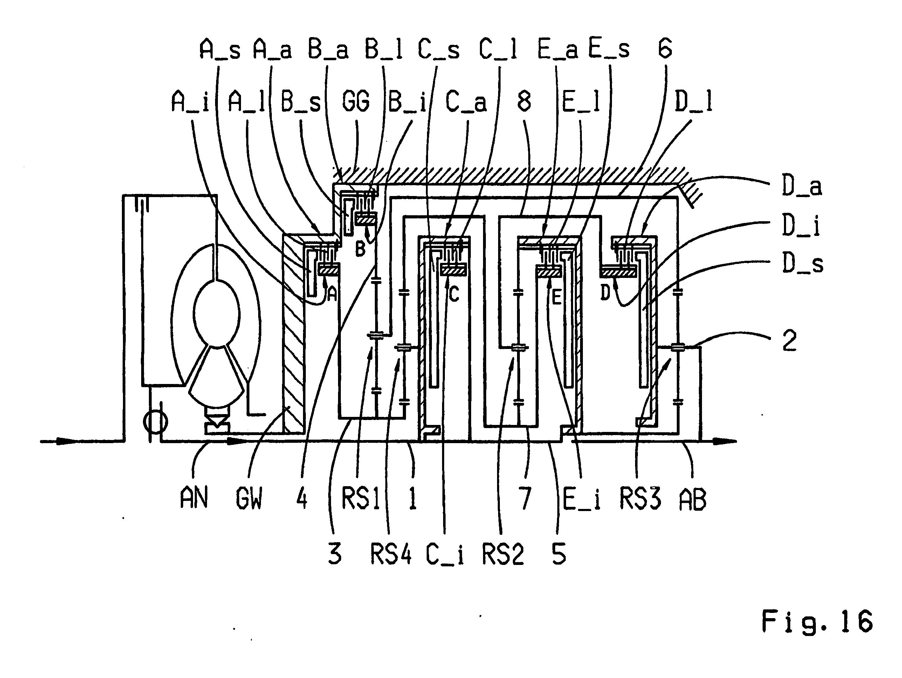

In Figur 16 schließlich ist eine beispielhafte dritte Bauteilanordnungs-Variante für das Mehrstufengetriebe gemäß Figur 4 dargestellt, abgeleitet aus der anhand Figur 12 zuvor bereits beschriebenen Ausgestaltungsvariante für das Mehrstufengetriebe gemäß Figur 4. Die Unterschiede zu Figur 12 betreffen die räumliche Anordnung der beiden Bremsen A und B benachbart zum ersten Planetenradsatz RS1 auf der Antriebsseite des Getriebes sowie die räumliche Anordnung der Kupplung C im Bereich zwischen den Planetenradsätzen.

Die beiden Bremsen A und B sind in axialer Richtung gesehen zumindest im wesentlichen nebeneinander angeordnet, aber auch in radialer Richtung gesehen übereinander. Zum einen ist die Bremse B dabei näher am ersten Planetenradsatz RS1 angeordnet als die Bremse A, zum anderen ist die Bremse B auch auf einem größeren Durchmesser angeordnet als die Bremse A. Die Lamellenpakete A_l, B_l beider Bremsen A, B sind unmittelbar benachbart zum ersten Planetenradsatz RS1 angeordnet; die auf diese Lamellenpakete A_l, B_l wirkenden Servoeinrichtungen A_s, B_s sind beide auf der dem ersten Planetenradsatzes RS1 abgewandten Seite des jeweiligen Lamellenpaketes A_l bzw. B_l angeordnet. Die Außenlamellenträger A_a, B_a der beiden Bremsen A, B sind beispielhaft in die Gehäusewand GW integriert, welche mit dem Getriebegehäuse GG verbunden ist und so die dem hier nicht näher dargestellten Antriebsmotor des Getriebes zugewandte Außenwand des Getriebegehäuses bildet. Beide Servoeinrichtungen A_s, B_s sind in dieser Gehäusewand GW axial verschiebbar gelagert und betätigen ihr jeweils zugeordnetes Lamellenpaket A_l bzw. B_l beim Schließen der jeweiligen Bremse A bzw. B axial in Richtung der Planetenradsätze. Das benötigte Druckmittel wird den Servoeinrichtungen A_s, B_s zweckmäßigerweise über entsprechende Kanäle zugeleitet, die zumindest abschnittsweise innerhalb der Gehäusewand GW verlaufen.

Die Kupplung C ist nunmehr räumlich gesehen in einem Bereich axial zwischen dem vierten Planetenradsatz RS4 und dem zweiten Planetenradsatz RS2 angeordnet. Dabei bildet der Außenlamellenträger C_a der Kupplung C einen Abschnitt der ersten Welle 1 des Getriebes und ist gemäß dem Getriebeschema ständig mit der Antriebswelle AN des Getriebes und dem Steg des vierten Planetenradsatzes RS4 verbunden. Entsprechend bildet der Innenlamellenträger C_i der Kupplung C einen Abschnitt der fünften Welle 5 des Getriebes und ist gemäß dem Getriebeschema ständig mit dem Sonnenrad des dritten Planetenradsatzes RS3 und (über den Außenlamellenträger E_a der Kupplung E) mit dem Hohlrad des zweiten Planetenradsatzes RS2 verbunden. An seinem Außendurchmesser weist der Innenlamellenträger C_i ein geeignetes Mitnahmeprofil auf zur Aufnahme der vorzugsweise als Belaglamellen ausgeführten innenverzahnten Lamellen des Lamellenpaketes C_l der Kupplung C. Geometrisch ist der Außenlamellenträger C_a als ein in Richtung des zweiten Planetenradsatzes RS2 hin geöffneter zylinderförmiger Topf ausgebildet, mit einem Topfboden, der unmittelbar an den vierten Planetenradsatz RS4 angrenzt und mit dessen Steg verbunden ist und im Bereich seines Innendurchmessers mit der Antriebswelle AN verbunden ist, sowie mit einen zylinderringförmigen Abschnitt, der sich ausgehend vom Außendurchmesser des Topfbodens axial in Richtung des zweiten Planetenradsatzes RS2 erstreckt und an seinem Innendurchmesser ein geeignetes Mitnahmeprofil aufweist zur Aufnahme der vorzugsweise als Stahllamellen ausgeführten außenverzahnten Lamellen des Lamellenpaketes C_l der Kupplung C. Die diesem Lamellenpaket C_l zugeordnete Servoeinrichtung C_s ist innerhalb des durch den Außenlamellenträger C_a gebildeten Zylinderraums angeordnet, an dem Außenlamellenträger C_a axial verschiebbar gelagert, rotiert stets mit Drehzahl der Antriebswelle AN und betätigt das Lamellenpaket C_l beim Schließen der Kupplung C axial in Richtung des zweiten Planetenradsatzes RS2. Druckmittel und Schmiermittel können der Servoeinrichtung C_s in konstruktiv einfacher Weise über entsprechende Kanäle bzw. Bohrungen direkt von der Antriebswelle AN her zugeleitet werden. In Figur 16 angedeutet ist zudem eine mögliche radiale Lagerung zwischen einer mit der Antriebswelle AN verbundenen Nabe des Außenlamellenträgers C_a der Kupplung C und der fünften Welle 5 des Getriebes.

Die beiden Kupplungen D und E sind axial nebeneinander in einem Bereich axial zwischen dem zweiten und dritten Planetenradsatz RS2, RS3 angeordnet, wobei die Kupplung D axial an den dritten Planetenradsatz RS3 angrenzt, und wobei die Kupplung E axial an den zweiten Planetenradsatz RS2 angrenzt.

Die konstruktive Ausbildung der Kupplung D wurde im wesentlichen aus Figur 12 übernommen. Der in etwa zylinderringförmig ausgebildete Innenlamellenträger D_i der Kupplung D bildet einen Abschnitt der Welle 8 des Getriebes, nimmt die vorzugsweise als Belaglamellen ausgebildeten Innenlamellen des Lamellenpaketes D_l der Kupplung D auf und ist auf der dem dritten Planetenradsatz RS3 abgewandten Seite des Lamellenpaketes D_l mit dem Steg des zweiten Planetenradsatzes RS2 verbunden, wobei dieser Abschnitt der Welle 8 den zweiten Planetenradsatz RS2 und die Kupplung E in axialer Richtung gesehen radial übergreift. Der Außenlamellenträger D_a der Kupplung D ist als ein in Richtung Planetenradsatz RS2 hin geöffneter zylinderförmiger Topf ausgebildet, mit einem Topfboden, der unmittelbar an den dritten Planetenradsatz RS3 angrenzt und mit dessen Steg verbunden ist, sowie mit einem zylinderringförmigen Abschnitt, der sich ausgehend vom Außendurchmesser des Topfbodens axial in Richtung Kupplung E bzw. Planetenradsatz RS2 erstreckt und an seinem Innendurchmesser die vorzugsweise als Stahllamellen ausgebildeten Außenlamellen des Lamellenpaketes D_l der Kupplung D aufnimmt. Die dem Lamellenpaket D_l zugeordnete Servoeinrichtung D_s ist innerhalb des durch den Außenlamellenträger D_a gebildeten Zylinderraums angeordnet, an dem Außenlamellenträger D_a axial verschiebbar gelagert, rotiert stets mit Drehzahl der Abtriebswelle AB und betätigt das Lamellenpaket D_l beim Schließen der Kupplung D axial in Richtung des zweiten Planetenradsatzes RS2. Druckmittel und Schmiermittel können der Servoeinrichtung D_s über entsprechende Kanäle von der Abtriebswelle AB her über eine auf der Abtriebswelle AB verdrehbar gelagerten Sonnenwelle des Planetenradsatzes RS3 und einer auf der genannten Sonnenwelle verdrehbar gelagerten Nabe des Außenlamellenträgers D_a zugeleitet werden, beispielsweise aber auch über entsprechende Kanäle von der Abtriebswelle AB her über den Steg des dritten Planetenradsatzes RS3.

Der in etwa scheibenförmig ausgebildete Innenlamellenträger E_i der Kupplung E bildet einen Abschnitt der Welle 7 des Getriebes, grenzt axial unmittelbar an den zweiten Planetenradsatz RS2 an, ist im Bereich seines Innendurchmessers mit dem Sonnenrad des zweiten Planetenradsatzes RS2 verbunden und nimmt an seinem Außendurchmesser die vorzugsweise als Belaglamellen ausgebildeten Innenlamellen des Lamellenpaketes E_l der Kupplung E auf. Der Außenlamellenträger E_a der Kupplung E ist als ein in Richtung Planetenradsatz RS2 hin geöffneter zylinderförmiger Topf ausgebildet. Der scheibenförmige Topfboden dieses Außenlamellenträgers E_a erstreckt sich in radialer Richtung axial benachbart zur Kupplung D auf deren dem zweiten Planetenradsatz zugewandten Seite. Am Innendurchmesser des genannten Topfbodens ist eine Nabe des Außenlamellenträger E_a vorgesehen, die einerseits mit einem das Sonnenrad des zweiten Planetenradsatz RS2 durchdringenden Wellenabschnitt der Welle 5 und andererseits mit der Sonnenwelle des dritten Planetenradsatzes RS3 verdrehfest verbunden ist. In Figur 16 angedeutet ist auch eine mögliche radiale Lagerung zwischen der Nabe des Außenlamellenträgers E_a und der Abtriebswelle AB. Am Außendurchmesser des genannten Topfbodens schließt sich ein zylinderringförmiger Abschnitt des Außenlamellenträgers E_a an und erstreckt sich axial in Richtung des zweiten Planetenradsatzes RS2, übergreift dabei das Lamellenpaket E_l der Kupplung E, nimmt an seinem Innendurchmesser die vorzugsweise als Stahllamellen ausgebildeten Außenlamellen des Lamellenpaketes E_l auf und ist mit dem Hohlrad des zweiten Planetenradsatzes RS2 (vorzugsweise lösbar) verdrehfest verbunden. Die dem Lamellenpaket E_l zugeordnete Servoeinrichtung E_s der Kupplung E ist innerhalb des durch den Außenlamellenträger E_a gebildeten Zylinderraums angeordnet, an dem Außenlamellenträger E_a axial verschiebbar gelagert, rotiert stets mit Drehzahl der Welle 5 und betätigt das Lamellenpaket E_l beim Schließen der Kupplung E axial in Richtung des zweiten Planetenradsatzes RS2. Druckmittel und Schmiermittel können der Servoeinrichtung E_s entweder über entsprechende Kanäle von der Abtriebswelle AB her direkt über die Nabe des Außenlamellenträgers E_a der Kupplung E zugeführt werden oder aber über entsprechende Kanäle von der Antriebswelle AN her über den das Sonnenrad des zweiten Planetenradsatz RS2 durchdringenden Wellenabschnitt der Welle 5 und die Nabe des Außenlamellenträgers E_a der Kupplung E.

Für alle zuvor dargestellten bzw. beschriebenen Ausführungsbeispiele der Getriebefamilie gemäß der Erfindung gilt zudem folgendes:

Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle AN durch ein Anfahrelement von einem Antriebsmotor nach Bedarf getrennt werden, wobei als ein solche Anfahrelement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle AN oder der Abtriebswelle AB, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle
- 2: zweite Welle
- 3: dritte Welle
- 4: vierte Welle
- 5: fünfte Welle
- 6: sechste Welle
- 7: siebte Welle
- 8: achte Welle

- A: erstes Schaltelement, erste Bremse
- A_a: Außenlamellenträger des ersten Schaltelementes
- A_i: Innenlamellenträger des ersten Schaltelementes
- A_l: Lamellenpaket des ersten Schaltelementes
- A_s: Servoeinrichtung des ersten Schaltelementes

- B: zweites Schaltelement, zweite Bremse
- B_a: Außenlamellenträger des zweiten Schaltelementes
- B_i: Innenlamellenträger des zweiten Schaltelementes
- B_l: Lamellenpaket des zweiten Schaltelementes
- B_s: Servoeinrichtung des zweiten Schaltelementes

- C: drittes Schaltelement, erste Kupplung
- C_a: Außenlamellenträger des dritten Schaltelementes
- C_i: Innenlamellenträger des dritten Schaltelementes
- C_l: Lamellenpaket des dritten Schaltelementes
- C_s: Servoeinrichtung des dritten Schaltelementes

- D: viertes Schaltelement, zweite Kupplung
- D_a: Außenlamellenträger des vierten Schaltelementes
- D_i: Innenlamellenträger des vierten Schaltelementes
- D_l: Lamellenpaket des vierten Schaltelementes
- D_s: Servoeinrichtung des vierten Schaltelementes

- E: fünftes Schaltelement, dritte Kupplung
- E_a: Außenlamellenträger des fünften Schaltelementes
- E_i: Innenlamellenträger des fünften Schaltelementes
- E_l: Lamellenpaket des fünften Schaltelementes
- E_s: Servoeinrichtung des fünften Schaltelementes

- AN: Antriebswelle
- AB: Abtriebswelle
- GG: Gehäuse
- GN: gehäusefeste Nabe
- GW: Gehäusewand

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzes

- RS2: zweiter Planetenradsatz
- HO2: Hohlrad des zweiten Planetenradsatzes
- SO2: Sonnenrad des zweiten Ptanetenradsatzes
- ST2: Steg des zweiten Planetenradsatzes
- PL2: Planetenräder des zweiten Planetenradsatzes

- RS3: dritter Planetenradsatz

- HO3: Hohlrad des dritten Planetenradsatzes
- SO3: Sonnenrad des dritten Planetenradsatzes
- ST3: Steg des dritten Planetenradsatzes
- PL3: Planetenräder des dritten Planetenradsatzes

- RS4: vierter Planetenradsatz
- HO4: Hohlrad des vierten Planetenradsatzes
- SO4: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (AN) und eine Abtriebswelle (AB), vier Planetenradsätze (RS1, RS2, RS3, RS4), mindestens acht drehbare Wellen (1, 2, 3, 4, 5, 6, 7, 8) sowie fünf Schaltelemente (A, B, C, D, E), deren selektives Eingreifen verschiedene Übersetzungsverhältnisse zwischen der Antriebswelle (AN) und der Abtriebswelle (AB) bewirkt, so dass acht Vorwärtsgänge und zumindest ein Rückwärtsgang derart realisierbar sind, dass in jedem Gang des Mehrstufengetriebes nur zwei der Schaltelemente (A, B, C, D, E) nicht in Eingriff sind, wobei
▪ ein Steg (ST4) des vierten Planetenradsatzes (RS4) und die Antriebswelle (AN) verdrehfest miteinander verbunden sind und die erste Welle (1) bilden,
▪ ein Steg (ST3) des dritten Planetenradsatzes (RS3) und die Abtriebswelle (AB) verdrehfest miteinander verbunden sind und die zweite Welle (2) bilden,
▪ ein Sonnenrad (S01) des ersten Planetenradsatzes (RS1) und ein Sonnenrad (S04) des vierten Planetenradsatzes (RS4) verdrehfest miteinander verbunden sind und die dritte Welle (3) bilden,
▪ ein Hohlrad (H01) des ersten Planetenradsatzes (RS1) die vierte Welle (4) bildet,
▪ ein Hohlrad (H02) des zweiten Planetenradsatzes (RS2) und ein Sonnenrad (S03) des dritten Planetenradsatzes (RS3) verdrehfest miteinander verbunden sind und die fünfte Welle (5) bilden,
▪ ein Steg (ST1) des ersten Planetenradsatzes (RS1) und ein Hohlrad (H03) des dritten Planetenradsatzes (RS3) verdrehfest miteinander verbunden sind und die sechste Welle (6) bilden,
▪ ein Sonnenrad (S02) des zweiten Planetenradsatzes (RS2) und ein Hohlrad (H04) des vierten Planetenradsatzes (RS4) verdrehfest miteinander verbunden sind und die siebte Welle (7) bilden,
▪ ein Steg (ST2) des zweiten Planetenradsatzes (RS2) die achte Welle (8) bildet,
▪ das erste Schaltelement (A) im Kraftfluss zwischen der dritten Welle (3) und einem Gehäuse (GG) des Getriebes angeordnet ist,
▪ das zweite Schaltelement (B) im Kraftfluss zwischen der vierten Welle (4) und dem Gehäuse (GG) des Getriebes angeordnet ist,
▪ das dritte Schaltelement (C) im Kraftfluss zwischen der fünften Welle (5) und der ersten Welle (1) angeordnet ist,
▪ das vierte Schaltelement (D) im Kraftfluss entweder zwischen der achten Welle (8) und der zweiten Welle (2) oder zwischen der achten Welle (8) und der sechsten Welle (6) angeordnet ist, und
▪ das fünfte Schaltelement (E) im Kraftfluss entweder zwischen der siebten Welle (7) und der fünften Welle (5), zwischen der siebten Welle (7) und der achten Welle (8) oder zwischen der fünften Welle (5) und der achten Welle (8) angeordnet ist.

2. Mehrstufengetriebe nach Anspruch 1, **dadurch gekennzeichnet, dass** sich
▪ der erste Vorwärtsgang durch Schließen des ersten, zweiten und dritten Schaltelementes (A, B, C),
▪ der zweite Vorwärtsgang durch Schließen des ersten, zweiten und fünften Schaltelementes (A, B, E),
▪ der dritte Vorwärtsgang durch Schließen des zweiten, dritten und fünften Schaltelementes (B, C, E),
▪ der vierte Vorwärtsgang durch Schließen des zweiten, vierten und fünften Schaltelementes (B, D, E),
▪ der fünfte Vorwärtsgang durch Schließen des zweiten, dritten und vierten Schaltelementes (B, C, D),
▪ der sechste Vorwärtsgang durch Schließen des dritten, vierten und fünften Schaltelementes (C, D, E),
▪ der siebte Vorwärtsgang durch Schließen des ersten, dritten und vierten Schaltelementes (A, C, D),
▪ der achte Vorwärtsgang durch Schließen des ersten, vierten und fünften Schaltelementes (A, D, E) und
▪ ein Rückwärtsgang durch Schließen des ersten, zweiten und vierten Schaltelementes (A, B, D)
ergibt.

3. Mehrstufengetriebe nach Anspruch 1 oder 2, **dadurch gekennzeichnet, dass** alle vier Planetenradsätze (RS1, RS2, RS3, RS4) als Minus-Planetenradsätze ausgebildet sind.

4. Mehrstufengetriebe nach Anspruch 1, 2 oder 3, **dadurch gekennzeichnet, dass** die Planetenradsätze (RS1, RS2, RS3, RS4) koaxial zueinander und in axialer Richtung hintereinander in einer Reihenfolge "RS2, RS4, RS1, RS3" angeordnet sind.

5. Mehrstufengetriebe nach Anspruch 4, **dadurch gekennzeichnet, dass** das erste und zweite Schaltelement (A, B) räumlich gesehen axial unmittelbar nebeneinander in einem Bereich radial oberhalb der Planetenradsätze (RS1 bis RS4) angeordnet sind.

6. Mehrstufengetriebe nach Anspruch 4 oder 5, **dadurch gekennzeichnet, dass** das erste und zweite Schaltelement (A, B) räumlich gesehen axial zwischen dem ersten und vierten Planetenradsatz (RS1, RS4) angeordnet sind.

7. Mehrstufengetriebe nach Anspruche 4, 5 oder 6, **dadurch gekennzeichnet, dass** das zweite Schaltelement (B) räumlich gesehen zumindest teilweise radial über dem ersten Planetenradsatz (RS1) angeordnet ist, und dass das erste Schaltelement (A) zumindest teilweise in einem Bereich axial zwischen dem vierten und ersten Planetenradsatz (RS4, RS1) und/oder zumindest teilweise in einem Bereich radial über dem vierten Planetenradsatz (RS4) angeordnet ist.

8. Mehrstufengetriebe nach einem der Ansprüche 4 bis 7, **dadurch gekennzeichnet, dass** das dritte und fünfte Schaltelement (C, E) radial betrachtet im Wesentlichen übereinander und axial betrachtet zwischen dem zweiten und vierten Planetenradsatz (RS2, RS4) angeordnet sind.

9. Mehrstufengetriebe nach einem der Ansprüche 4 bis 7, **dadurch gekennzeichnet, dass** das dritte Schaltelement (C) räumlich gesehen zumindest teilweise in einem Bereich radial über dem zweiten Planetenradsatz (RS2) angeordnet ist, und dass das fünfte Schaltelement (E) axial betrachtet zwischen dem zweiten und vierten Planetenradsatz (RS2, RS4) angeordnet ist.

10. Mehrstufengetriebe nach einem der Ansprüche 4 bis 9, **dadurch gekennzeichnet, dass** das vierte Schaltelement (D) räumlich gesehen auf der dem vierten Planetenradsatz (RS4) abgewandten Seite des zweiten Planetenradsatzes (RS2) angeordnet ist, insbesondere axial unmittelbar angrenzend an den zweiten Planetenradsatzes (RS2).

11. Mehrstufengetriebe nach einem der Ansprüche 1 bis 4, **dadurch gekennzeichnet, dass** die Planetenradsätze (RS1, RS2, RS3, RS4) koaxial zueinander und in axialer Richtung hintereinander in einer Reihenfolge "RS1, RS4, RS2, RS3" angeordnet sind.

12. Mehrstufengetriebe nach Anspruch 11, **dadurch gekennzeichnet, dass** die vier Planetenradsätze (RS1, RS2, RS3, RS4) jeweils höchstens von einer Welle des Getriebes in axialer Richtung zentrisch durchgriffen werden.

13. Mehrstufengetriebe nach Anspruch 11 oder 12, **dadurch gekennzeichnet, dass** die dritte Welle (3) an einer gehäusefesten Nabe (GN) verdrehbar gelagert ist.

14. Mehrstufengetriebe nach Anspruch 11, 12 oder 13, **dadurch gekennzeichnet, dass** das erste und/oder zweite Schaltelement (A, B) räumlich gesehen zumindest teilweise in einem Bereich radial oberhalb des ersten oder vierten Planetenradsatzes (RS1, RS4) angeordnet ist.

15. Mehrstufengetriebe nach einem der Ansprüche 11 bis 14, **dadurch gekennzeichnet, dass** das erste und zweite Schaltelement (A, B) räumlich gesehen axial unmittelbar nebeneinander angeordnet sind.

16. Mehrstufengetriebe nach einem der Ansprüche 11 bis 14, **dadurch gekennzeichnet, dass** das zweite Schaltelement (B) räumlich gesehen zumindest weitgehend radial über dem ersten Schaltelement (A) angeordnet ist.

17. Mehrstufengetriebe nach einem der Ansprüche 11 bis 16, **dadurch gekennzeichnet, dass** das erste Schaltelement (A) räumlich gesehen zumindest teilweise auf der dem vierten Planetenradsatz (RS4) abgewandten Seite des ersten Planetenradsatzes (RS1) angeordnet ist.

18. Mehrstufengetriebe nach einem der Ansprüche 11 bis 17, **dadurch gekennzeichnet, dass** das fünfte Schaltelement (E) axial unmittelbar an den zweiten Planetenradsatz (RS2) angrenzt.

19. Mehrstufengetriebe nach einem der Ansprüche 11 bis 18, **dadurch gekennzeichnet, dass** das vierte und fünfte Schaltelement (D, E) räumlich gesehen im Wesentlichen in einem Bereich axial zwischen dem zweiten und dritten Planetenradsatz (RS2, RS3) angeordnet sind.

20. Mehrstufengetriebe nach einem der Ansprüche 11 bis 19, **dadurch gekennzeichnet, dass** das vierte und fünfte Schaltelement (D, E) räumlich gesehen im Wesentlichen axial nebeneinander angeordnet sind.

21. Mehrstufengetriebe nach einem der Ansprüche 11 bis 18, **dadurch gekennzeichnet, dass** das vierte Schaltelement (D) gesehen im Wesentlichen in einem Bereich axial zwischen dem ersten und vierten Planetenradsatz (RS1, RS4) angeordnet ist, und dass das fünfte Schaltelement (E) räumlich gesehen im Wesentlichen in einem Bereich axial zwischen dem zweiten und dritten Planetenradsatz (RS2, RS3) angeordnet ist.

22. Mehrstufengetriebe nach einem der Ansprüche 11 bis 18, **dadurch gekennzeichnet, dass** das vierte Schaltelement (D) gesehen im Wesentlichen in einem Bereich axial zwischen dem vierten und zweiten Planetenradsatz (RS4, RS2) angeordnet ist, und dass das fünfte Schaltelement (E) räumlich gesehen im Wesentlichen in einem Bereich axial zwischen dem zweiten und dritten Planetenradsatz (RS2, RS3) angeordnet ist.

23. Mehrstufengetriebe nach einem der Ansprüche 11 bis 22, **dadurch gekennzeichnet, dass** das dritte Schaltelement (C) räumlich gesehen im Wesentlichen in einem Bereich axial zwischen dem zweiten und dritten Planetenradsatz (RS2, RS3) angeordnet ist.

24. Mehrstufengetriebe nach einem der Ansprüche 11 bis 23, **dadurch gekennzeichnet, dass** das dritte Schaltelement (C) räumlich gesehen axial benachbart zum dritten Planetenradsatz (RS3) angeordnet ist.

25. Mehrstufengetriebe nach einem der Ansprüche 11 bis 23, **dadurch gekennzeichnet, dass** das dritte und fünfte Schaltelement (C, E) räumlich gesehen im Wesentlichen axial nebeneinander angeordnet sind.

26. Mehrstufengetriebe nach einem der Ansprüche 11 bis 23, **dadurch gekennzeichnet, dass** das dritte und fünfte Schaltelement (C, E) radial betrachtet im Wesentlichen übereinander angeordnet sind.

27. Mehrstufengetriebe nach einem der Ansprüche 11 bis 23, **dadurch gekennzeichnet, dass** das dritte Schaltelement (C) innerhalb eines Zylinderraums angeordnet ist, der durch einen Lamellenträger des fünften Schaltelementes (E) gebildet wird.

28. Mehrstufengetriebe nach einem der Ansprüche 11 bis 27, **dadurch gekennzeichnet, dass** das vierte Schaltelement (D) räumlich gesehen im Wesentlichen in einem Bereich axial zwischen dem vierten und zweiten Planetenradsatz (RS4, RS2) angeordnet ist, und dass das fünfte Schaltelement (E) räumlich gesehen im Wesentlichen in einem Bereich axial zwischen dem zweiten und dritten Planetenradsatz (RS2, RS3) angeordnet ist, insbesondere axial unmittelbar angrenzend an den zweiten Planetenradsatz (RS2).

29. Mehrstufengetriebe nach einem der Ansprüche 11 bis 22, **dadurch gekennzeichnet, dass** das dritte Schaltelement (C) räumlich gesehen auf der dem zweiten Planetenradsatz (RS2) abgewandten Seite des dritten Planetenradsatzes (RS3) angeordnet ist, axial unmittelbar an den dritten Planetenradsatz (RS3) angrenzend.

30. Mehrstufengetriebe nach einem der Ansprüche 11 bis 22, **dadurch gekennzeichnet, dass** das dritte Schaltelement (C) räumlich gesehen in einem Bereich axial zwischen dem vierten und zweiten Planetenradsatz (RS4, RS2) angeordnet ist angeordnet ist, axial unmittelbar an den vierten Planetenradsatz (RS4) angrenzend.

31. Mehrstufengetriebe nach einem der vorstehenden Ansprüche, **dadurch gekennzeichnet, dass** die Antriebswelle (AN) durch ein Anfahrelement - insbesondere durch einen hydrodynamischen Wandler oder eine hydraulische Kupplung oder eine trockene Anfahrkupplung oder eine nasse Anfahrkupplung oder eine Magnetpulverkupplung oder eine Fliehkraftkupplung - von einem Antriebs-Motor des Kraftfahrzeugs trennbar ist.

32. Mehrstufengetriebe nach einem der vorstehenden Ansprüche, **dadurch gekennzeichnet, dass** ein Anfahren des Kraftfahrzeugs mittels des getriebeinternen ersten Schaltelementes (A) oder mittels des getriebeinternen zweiten Schaltelementes (B) des Getriebes erfolgt, wobei die Antriebswelle (AN) ständig verdrehfest oder drehelastisch mit der Kurbelwelle des AntriebsMotors verbunden ist.

## Claims

1. Multistep gear mechanism of planetary construction, in particular automatic transmission for a motor vehicle, comprising one drive shaft (AN) and one output shaft (AB), four planetary gear sets (RS1, RS2, RS3, RS4), at least eight rotatable shafts (1, 2, 3, 4, 5, 6, 7, 8) and five switching elements (A, B, C, D, E), the selective engagement of which brings about different transmission ratios between the drive shaft (AN) and the output shaft (AB), with the result that eight forward gears and at least one reverse gear can be realizedsuch that only two of the switching elements (A, B, C, D, E) are not in engagement in each gear of the multistep gear mechanism, wherein
▪ a web (ST4) of the fourth planetary gear set (RS4) and the drive shaft (AN) are connected fixedly to one another so as to rotate together and form the first shaft (1),
▪ a web (ST3) of the third planetary gear set (RS3) and the output shaft (AB) are connected fixedly to one another so as to rotate together and form the second shaft (2),
▪ a sun gear (SO1) of the first planetary gear set (RS1) and a sun gear (S04) of the fourth planetary gear set (RS4) are connected fixedly to one another so as to rotate together and form the third shaft (3),
▪ an internal gear (HO1) of the first planetary gear set (RS1) forms the fourth shaft (4),
▪ an internal gear (H02) of the second planetary gear set (RS2) and a sun gear (SO3) of the third planetary gear set (RS3) are connected fixedly to one another so as to rotate together and form the fifth shaft (5),
▪ a web (ST1) of the first planetary gear set (RS1) and an internal gear (H03) of the third planetary gear set (RS3) are connected fixedly to one another so as to rotate together and form the sixth shaft (6),
▪ a sun gear (S02) of the second planetary gear set (RS2) and an internal gear (H04) of the fourth planetary gear set (RS4) are connected fixedly to one another so as to rotate together and form the seventh shaft (7),
▪ a web (ST2) of the second planetary gear set (RS2) forms the eighth shaft (8),
▪ the first switching element (A) is arranged in the force flow between the third shaft (3) and a housing (GG) of the transmission,
▪ the second switching element (B) is arranged in the force flow between the fourth shaft (4) and the housing (GG) of the transmission,
▪ the third switching element (C) is arranged in the force flow between the fifth shaft (5) and the first shaft (1),
▪ the fourth switching element (D) is arranged in the force flow either between the eighth shaft (8) and the second shaft (2) or between the eighth shaft (8) and the sixth shaft (6), and
▪ the fifth switching element (E) is arranged in the force flow either between the seventh shaft (7) and the fifth shaft (5), between the seventh shaft (7) and the eighth shaft (8) or between the fifth shaft (5) and the eighth shaft (8).

2. Multistep gear mechanism according to Claim 1 **characterized in that**
▪ the first forward gear results from closure of the first, second and third switching elements (A, B, C),
▪ the second forward gear results from closure of the first, second and fifth switching elements (A, B, E),
▪ the third forward gear results from closure of the second, third and fifth switching elements (B, C, E),
▪ the fourth forward gear results from closure of the second, fourth and fifth switching elements (B, D, E),
▪ the fifth forward gear results from closure of the second, third and fourth switching elements (B, C, D),
▪ the sixth forward gear results from closure of the third, fourth and fifth switching elements (C, D, E),
▪ the seventh forward gear results from closure of the first, third and fourth switching elements (A, C, D),
▪ the eighth forward gear results from closure of the first, fourth and fifth switching elements (A, D, E), and
▪ a reverse gear results from closure of the first, second and fourth switching elements (A, B, D).

3. Multistep gear mechanism according to Claim 1 or 2, **characterized in that** all four planetary gear sets (RS1, RS2, RS3, RS4) are configured as minus planetary gear sets.

4. Multistep gear mechanism according to Claim 1, 2 or 3, **characterized in that** the planetary gear sets (RS1, RS2, RS3, RS4) are arranged coaxially with respect to one another and behind one another in the axial direction in a sequence "RS2, RS4, RS1, RS3".

5. Multistep gear mechanism according to Claim 4, **characterized in that**, viewed in three dimensions, the first and second switching elements (A, B) are arranged axially directly next to one another in a region radially above the planetary gear sets (RS1 to RS4).

6. Multistep gear mechanism according to Claim 4 or 5, **characterized in that**, viewed in three dimensions, the first and second switching elements (A, B) are arranged axially between the first and fourth planetary gear sets (RS1, RS4).

7. Multistep gear mechanism according to Claims 4, 5 or 6, **characterized in that**, viewed in three dimensions, the second switching element (B) is arranged at least partially radially above the first planetary gear set (RS1), and **in that** the first switching element (A) is arranged at least partially in a region axially between the fourth and first planetary gear sets (RS4, RS1) and/or at least partially in a region radially above the fourth planetary gear set (RS4).

8. Multistep gear mechanism according to one of Claims 4 to 7, **characterized in that** the third and fifth switching elements (C, E) are arranged substantially above one another as viewed radially and are arranged between the second and fourth planetary gear sets (RS2, RS4) as viewed axially.

9. Multistep gear mechanism according to one of Claims 4 to 7, **characterized in that**, viewed in three dimensions, the third switching element (C) is arranged at least partially in a region radially above the second planetary gear set (RS2), and **in that**, as viewed axially, the fifth switching element (E) is arranged between the second and fourth planetary gear sets (RS2, RS4).

10. Multistep gear mechanism according to one of Claims 4 to 9, **characterized in that**, viewed in three dimensions, the fourth switching element (D) is arranged on that side of the second planetary gear set (RS2) which faces away from the fourth planetary gear set (RS4), in particular is arranged so as to be axially immediately adjacent to the second planetary gear set (RS2).

11. Multistep gear mechanism according to one of Claims 1 to 4, **characterized in that** the planetary gear sets (RS1, RS2, RS3, RS4) are arranged coaxially with respect to one another and behind one another in the axial direction in a sequence "RS1, RS4, RS2, RS3".

12. Multistep gear mechanism according to Claim 11, **characterized in that** the four planetary gear sets (RS1, RS2, RS3, RS4) are reached through centrically in the axial direction in each case at most by one shaft of the transmission.

13. Multistep gear mechanism according to Claim 11 or 12, **characterized in that** the third shaft (3) is mounted rotatably on a hub (GN) which is fixed to the housing.

14. Multistep gear mechanism according to Claim 11, 12 or 13, **characterized in that**, viewed in three dimensions, the first and/or second switching element (A, B) is arranged at least partially in a region radially above the first or fourth planetary gear set (RS1, RS4).

15. Multistep gear mechanism according to one of Claims 11 to 14, **characterized in that**, viewed in three dimensions, the first and second switching elements (A, B) are arranged axially directly next to one another.

16. Multistep gear mechanism according to one of Claims 11 to 14, **characterized in that**, viewed in three dimensions, the second switching element (B) is arranged at least largely radially above the first switching element (A).

17. Multistep gear mechanism according to one of Claims 11 to 16, **characterized in that**, viewed in three dimensions, the first switching element (A) is arranged at least partially on that side of the first planetary gear set (RS1) which faces away from the fourth planetary gear set (RS4).

18. Multistep gear mechanism according to one of Claims 11 to 17, **characterized in that** the fifth switching element (E) is axially directly adjacent to the second planetary gear set (RS2).

19. Multistep gear mechanism according to one of Claims 11 to 18, **characterized in that**, viewed in three dimensions, the fourth and fifth switching elements (D, E) are arranged essentially in a region axially between the second and third planetary gear sets (RS2, RS3).

20. Multistep gear mechanism according to one of Claims 11 to 19, **characterized in that**, viewed in three dimensions, the fourth and fifth switching elements (D, E) are arranged substantially axially next to one another.

21. Multistep gear mechanism according to one of Claims 11 to 18, **characterized in that**, as viewed, the fourth switching element (D) is arranged substantially in a region axially between the first and fourth planetary gear sets (RS1, RS4), and **in that**, viewed in three dimensions, the fifth switching element (E) is arranged substantially in a region axially between the second and third planetary gear sets (RS2, RS3).

22. Multistep gear mechanism according to one of Claims 11 to 18, **characterized in that**, as viewed, the fourth switching element (D) is arranged substantially in a region axially between the fourth and second planetary gear sets (RS4, RS2), and **in that**, viewed in three dimensions, the fifth switching element (E) is arranged substantially in a region axially between the second and third planetary gear sets (RS2, RS3).

23. Multistep gear mechanism according to one of Claims 11 to 22, **characterized in that**, viewed in three dimensions, the third switching element (C) is arranged substantially in a region axially between the second and third planetary gear sets (RS2, RS3).

24. Multistep gear mechanism according to one of Claims 11 to 23, **characterized in that**, viewed in three dimensions, the third switching element (C) is arranged axially adjacently to the third planetary gear set (RS3).

25. Multistep gear mechanism according to one of Claims 11 to 23, **characterized in that**, viewed in three dimensions, the third and fifth switching elements (C, E) are arranged substantially axially next to one another.

26. Multistep gear mechanism according to one of Claims 11 to 23, **characterized in that**, viewed radially, the third and fifth switching elements (C, E) are arranged substantially above one another.

27. Multistep gear mechanism according to one of Claims 11 to 23, **characterized in that** the third switching element (C) is arranged within a cylindrical space which is formed by a multiple-disc carrier of the fifth switching element (E).

28. Multistep gear mechanism according to one of Claims 11 to 27, **characterized in that**, viewed in three dimensions, the fourth switching element (D) is arranged substantially in a region axially between the fourth and second planetary gear sets (RS4, RS2), and **in that**, viewed in three dimensions, the fifth switching element (E) is arranged substantially in a region axially between the second and third planetary gear sets (RS2, RS3), in particular is arranged so as to be axially immediately adjacent to the second planetary gear set (RS2).

29. Multistep gear mechanism according to one of Claims 11 to 22, **characterized in that**, viewed in three dimensions, the third switching element (C) is arranged on that side of the third planetary gear set (RS3) which faces away from the second planetary gear set (RS2), so as to be axially immediately adjacent to the third planetary gear set (RS3).

30. Multistep gear mechanism according to one of Claims 11 to 22, **characterized in that**, viewed in three dimensions, the third switching element (C) is arranged in a region axially between the fourth and second planetary gear sets (RS4, RS2), and is arranged so as to be axially immediately adjacent to the fourth planetary gear set (RS4).

31. Multistep gear mechanism according to one of the preceding claims, **characterized in that** the drive shaft (AN) can be separated from a drive engine of the motor vehicle by a start-up element, in particular by a hydrodynamic converter or a hydraulic clutch or a dry start-up clutch or a wet start-up clutch or a magnetic-particle clutch or a centrifugal clutch.

32. Multistep gear mechanism according to one of the preceding claims, **characterized in that** a starting up of the motor vehicle is carried out by means of the first switching element (A) inside the gear mechanism or by means of the second switching element (B) inside the gear mechanism of the gear mechanism, the drive shaft (AN) being connected permanently rotatably fixedly or rotatably elastically to the crankshaft of the drive engine.

## Revendications

1. Boîte de vitesses à rapports multiples de construction planétaire, en particulier boîte de vitesses automatique pour un véhicule automobile, comprenant un arbre d'entraînement (AN) et un arbre de sortie (AB), quatre trains planétaires (RS1, RS2, RS3, RS4), au moins huit arbres rotatifs (1, 2, 3, 4, 5, 6, 7, 8) ainsi que cinq éléments de commutation (A, B, C, D, E), dont l'engagement sélectif donne lieu à différents rapports de multiplication entre l'arbre d'entraînement (AN) et l'arbre de sortie (AB), de sorte que huit vitesses de marche avant et au moins une vitesse de marche arrière puissent être obtenues de telle sorte que dans chaque vitesse de la boîte de vitesses à rapports multiples, seulement deux des éléments de commutation (A, B, C, D, E) ne soient pas en prise,
- une tige (ST4) du quatrième train planétaire (RS4) et l'arbre d'entraînement (AN) étant connectés l'un à l'autre de manière solidaire en rotation et formant le premier arbre (1),
- une tige (ST3) du troisième train planétaire (RS3) et l'arbre de sortie (AB) étant connectés de manière solidaire en rotation et formant le deuxième arbre (2),
- une roue solaire (SO1) du premier train planétaire (RS1) et une roue solaire (SO4) du quatrième train planétaire (RS4) étant connectées de manière solidaire en rotation et formant le troisième arbre (3),
- une couronne (H01) du premier train planétaire (RS1) formant le quatrième arbre (4),
- une couronne (H02) du deuxième train planétaire (RS2) et une roue solaire (SO3) du troisième train planétaire (RS3) étant connectées de manière solidaire en rotation et formant le cinquième arbre (5),
- une tige (ST1) du premier train planétaire (RS1) et une couronne (H03) du troisième train planétaire (RS3) étant connectées de manière solidaire en rotation et formant le sixième arbre (6),
- une roue solaire (SO2) du deuxième train planétaire (RS2) et une couronne (H04) du quatrième train planétaire (RS4) étant connectées de manière solidaire en rotation et formant le septième arbre (7),
- une tige (ST2) du deuxième train planétaire (RS2) formant le huitième arbre (8),
- le premier élément de commutation (A) étant disposé dans le flux de forces entre le troisième arbre (3) et un carter (GG) de la boîte de vitesses,
- le deuxième élément de commutation (B) étant disposé dans le flux de forces entre le quatrième arbre (4) et le carter (GG) de la boîte de vitesses,
- le troisième élément de commutation (C) étant disposé dans le flux de forces entre le cinquième arbre (5) et le premier arbre (1),
- le quatrième élément de commutation (D) étant disposé dans le flux de forces soit entre le huitième arbre (8) et le deuxième arbre (2), soit entre le huitième arbre (8) et le sixième arbre (6), et
- le cinquième élément de commutation (E) étant disposé dans le flux de forces soit entre le septième arbre (7) et le cinquième arbre (5), soit entre le septième arbre (7) et le huitième arbre (8), soit entre le cinquième arbre (5) et le huitième arbre (8).

2. Boîte de vitesses à rapports multiples selon la revendication 1, **caractérisée en ce que**
- la première vitesse de marche avant est obtenue par fermeture du premier, deuxième et troisième élément de commutation (A, B, C),
- la deuxième vitesse de marche avant est obtenue par fermeture du premier, deuxième et cinquième élément de commutation (A, B, E),
- la troisième vitesse de marche avant est obtenue par fermeture du deuxième, troisième et cinquième élément de commutation (B, C, E),
- la quatrième vitesse de marche avant est obtenue par fermeture du deuxième, quatrième et cinquième élément de commutation (B, D, E),
- la cinquième vitesse de marche avant est obtenue par fermeture du deuxième, troisième et quatrième élément de commutation (B, C, D),
- la sixième vitesse de marche avant est obtenue par fermeture du troisième, quatrième et cinquième élément de commutation (C, D, E),
- la septième vitesse de marche avant est obtenue par fermeture du premier, troisième et quatrième élément de commutation (A, C, D),
- la huitième vitesse de marche avant est obtenue par fermeture du premier, quatrième et cinquième élément de commutation (A, D, E), et
- on obtient une vitesse de marche arrière par fermeture du premier, deuxième et quatrième élément de commutation (A, B, D).

3. Boîte de vitesses à rapports multiples selon la revendication 1 ou 2, **caractérisée en ce que** les quatre trains planétaires (RS1, RS2, RS3, RS4) sont réalisés sous forme de trains planétaires négatifs.

4. Boîte de vitesses à rapports multiples selon les revendications 1, 2 ou 3, **caractérisée en ce que** les trains planétaires (RS1, RS2, RS3, RS4) sont disposés coaxialement les uns aux autres et les uns derrière les autres dans la direction axiale dans l'ordre "RS2, RS4, RS1, RS3".

5. Boîte de vitesses à rapports multiples selon la revendication 4, **caractérisée en ce que** le premier et le deuxième élément de commutation (A, B), vus spatialement, sont disposés axialement immédiatement l'un à côté de l'autre dans une région radialement au-dessus des trains planétaires (RS1 à RS4).

6. Boîte de vitesses à rapports multiples selon la revendication 4 ou 5, **caractérisée en ce que** le premier et le deuxième élément de commutation (A, B), vus spatialement, sont disposés axialement entre le premier et le quatrième train planétaire (RS1, RS4).

7. Boîte de vitesses à rapports multiples selon la revendication 4, 5 ou 6, **caractérisée en ce que** le deuxième élément de commutation (B), vu spatialement, est disposé au moins en partie radialement au-dessus du premier train planétaire (RS1), et **en ce que** le premier élément de commutation (A) est disposé au moins en partie dans une région axialement entre le quatrième et le premier train planétaire (RS4, RS1), et/ou au moins en partie dans une région radialement au-dessus du quatrième train planétaire (RS4).

8. Boîte de vitesses à rapports multiples selon l'une quelconque des revendications 4 à 7, **caractérisée en ce que** le troisième et le cinquième élément de commutation (C, E), considérés radialement, sont disposés essentiellement l'un au-dessus de l'autre, et considérés axialement, sont disposés entre le deuxième et le quatrième train planétaire (RS2, RS4).

9. Boîte de vitesses à rapports multiples selon l'une quelconque des revendications 4 à 7, **caractérisée en ce que** le troisième élément de commutation (C), vue spatialement, est disposé au moins en partie dans une région radialement au-dessus du deuxième train planétaire (RS2), et **en ce que** le cinquième élément de commutation (E), considéré axialement, est disposé entre le deuxième et le quatrième train planétaire (RS2, RS4).

10. Boîte de vitesses à rapports multiples selon l'une quelconque des revendications 4 à 9, **caractérisée en ce que** le quatrième élément de commutation (D), vu spatialement, est disposé du côté du deuxième train planétaire (RS2) opposé au quatrième train planétaire (RS4), notamment axialement directement en position adjacente au deuxième train planétaire (RS2).

11. Boîte de vitesses à rapports multiples selon l'une quelconque des revendications 1 à 4, **caractérisée en ce que** les trains planétaires (RS1, RS2, RS3, RS4) sont disposés coaxialement les uns aux autres et les uns derrière les autres dans la direction axiale, dans l'ordre "RS1, RS4, RS2, RS3".

12. Boîte de vitesses à rapports multiples selon la revendication 11, **caractérisée en ce que** les quatre trains planétaires (RS1, RS2, RS3, RS4) sont traversés à chaque fois au plus par un arbre de la boîte de vitesses centralement dans la direction axiale.

13. Boîte de vitesses à rapports multiples selon la revendication 11 ou 12, **caractérisée en ce que** le troisième arbre (3) est monté à rotation sur un moyeu (GN) fixé au carter.

14. Boîte de vitesses à rapports multiples selon la revendication 11, 12 ou 13, **caractérisée en ce que** le premier et/ou le deuxième élément de commutation (A, B), vu spatialement, est disposé au moins en partie dans une région radialement au-dessus du premier out quatrième train planétaire (RS1, RS4).

15. Boîte de vitesses à rapports multiples selon l'une quelconque des revendications 11 à 14, **caractérisée en ce que** le premier et le deuxième élément de commutation (A, B), vus spatialement, sont disposés axialement immédiatement l'un à côté de l'autre.

16. Boîte de vitesses à rapports multiples selon l'une quelconque des revendications 11 à 14, **caractérisée en ce que** le deuxième élément de commutation (B), vu spatialement, est disposé au moins sensiblement radialement au-dessus du premier élément de commutation (A).

17. Boîte de vitesses à rapports multiples selon l'une quelconque des revendications 11 à 16, **caractérisée en ce que** le premier élément de commutation (A), vu spatialement, est disposé au moins en partie du côté du premier train planétaire (RS1) opposé au quatrième train planétaire (RS4).

18. Boîte de vitesses à rapports multiples selon l'une quelconque des revendications 11 à 17, **caractérisée en ce que** le cinquième élément de commutation (E) est axialement immédiatement adjacent au deuxième train planétaire (RS2).

19. Boîte de vitesses à rapports multiples selon l'une quelconque des revendications 11 à 18, **caractérisée en ce que** le quatrième et le cinquième éléments de commutation (D, E), vu spatialement, sont disposé essentiellement dans une région axialement entre le deuxième et le troisième train planétaire (RS2, RS3).

20. Boîte de vitesses à rapports multiples selon l'une quelconque des revendications 11 à 19, **caractérisée en ce que** le quatrième et le cinquième élément de commutation (D, E), vus spatialement, sont disposés essentiellement axialement l'un à côté de l'autre.

21. Boîte de vitesses à rapports multiples selon l'une quelconque des revendications 11 à 18, **caractérisée en ce que** le quatrième élément de commutation (D), vu, est disposé essentiellement dans une région axialement entre le premier et le quatrième train planétaire (RS1, RS4), et **en ce que** le cinquième élément de commutation (E), vu spatialement, est disposé essentiellement dans une région axialement entre le deuxième et le troisième train planétaire (RS2, RS3).

22. Boîte de vitesses à rapports multiples selon l'une quelconque des revendications 11 à 18, **caractérisée en ce que** le quatrième élément de commutation (D), vu, est disposé essentiellement dans une région axialement entre le quatrième et le deuxième train planétaire (RS4, RS2), et **en ce que** le cinquième élément de commutation (E), vu spatialement, est disposé essentiellement dans une région axialement entre le deuxième et le troisième train planétaire (RS2, RS3).

23. Boîte de vitesses à rapports multiples selon l'une quelconque des revendications 11 à 22, **caractérisée en ce que** le troisième élément de commutation (C), vu spatialement, est disposé essentiellement dans une région axialement entre le deuxième et le troisième train planétaire (RS2, RS3).

24. Boîte de vitesses à rapports multiples selon l'une quelconque des revendications 11 à 23, **caractérisée en ce que** le troisième élément de commutation (C), vu spatialement, est disposé axialement en position adjacente au troisième train planétaire (RS3).

25. Boîte de vitesses à rapports multiples selon l'une quelconque des revendications 11 à 23, **caractérisée en ce que** le troisième et le cinquième élément de commutation (C, E), vus spatialement, sont disposés essentiellement axialement l'un à côté de l'autre.

26. Boîte de vitesses à rapports multiples selon l'une quelconque des revendications 11 à 23, **caractérisée en ce que** le troisième et le cinquième élément de commutation (C, E), considérés radialement, sont disposé essentiellement l'un au-dessus de l'autre.

27. Boîte de vitesses à rapports multiples selon l'une quelconque des revendications 11 à 23, **caractérisée en ce que** le troisième élément de commutation (C) est disposé à l'intérieur d'un espace cylindrique qui est formé par un support de disques du cinquième élément de commutation (E).

28. Boîte de vitesses à rapports multiples selon l'une quelconque des revendications 11 à 27, **caractérisée en ce que** le quatrième élément de commutation (D), vu spatialement, est disposé essentiellement dans une région axialement entre le quatrième et le deuxième train planétaire (RS4, RS2), et **en ce que** le cinquième élément de commutation (E), vu spatialement, est disposé essentiellement dans une région axialement entre le deuxième et le troisième train planétaire (RS2, RS3), notamment axialement directement en position adjacente au deuxième train planétaire (RS2).

29. Boîte de vitesses à rapports multiples selon l'une quelconque des revendications 11 à 22, **caractérisée en ce que** le troisième élément de commutation (C), vu spatialement, est disposé du côté du troisième train planétaire (RS3) opposé au deuxième train planétaire (RS2), axialement en position directement adjacente au troisième train planétaire (RS3).

30. Boîte de vitesses à rapports multiples selon l'une quelconque des revendications 11 à 22, **caractérisée en ce que** le troisième élément de commutation (C), vu spatialement, est disposé est disposé dans une région axialement entre le quatrième et le deuxième train planétaire (RS4, RS2), axialement en position directement adjacente au quatrième train planétaire (RS4).

31. Boîte de vitesses à rapports multiples selon l'une quelconque des revendications précédentes, **caractérisée en ce que** l'arbre d'entraînement (AN) peut être séparé d'un moteur d'entraînement du véhicule automobile par un élément de démarrage - notamment un convertisseur hydrodynamique ou un embrayage hydraulique ou un embrayage de démarrage sec ou un embrayage de démarrage humide, ou un embrayage à poudre magnétique ou un embrayage à force centrifuge.

32. Boîte de vitesses à rapports multiples selon l'une quelconque des revendications précédentes, **caractérisée en ce qu'**un démarrage du véhicule automobile s'effectue au moyen du premier (A) élément de commutation ou interne à la boîte de vitesses au moyen du deuxième élément de commutation (B) interne à la boîte de vitesses de la boîte de vitesses, l'arbre d'entraînement (AN) étant connecté constamment de manière solidaire en rotation ou élastique en rotation au vilebrequin du moteur d'entraînement.
